(19)

Europäisches
Patentamt

European
Patent Office

Office européen
des brevets

(11)  **EP 2 757 008 B1**

(12)  # EUROPEAN PATENT SPECIFICATION

(45) Date of publication and mention
of the grant of the patent:
**23.03.2016  Bulletin 2016/12**

(51) Int Cl.:
**B60T 8/18** *(2006.01)*     **B60T 17/22** *(2006.01)*
**B60T 13/66** *(2006.01)*

(21) Application number: **11872343.6**

(22) Date of filing: **16.09.2011**

(86) International application number:
**PCT/JP2011/071286**

(87) International publication number:
**WO 2013/038569 (21.03.2013 Gazette 2013/12)**

(54) **BRAKE CONTROL APPARATUS, BRAKE CONTROL METHOD, AND PROGRAM**

BREMSSTEUERVORRICHTUNG, BREMSSTEUERVERFAHREN UND PROGRAMM

APPAREIL DE COMMANDE DE FREIN, PROCÉDÉ DE COMMANDE DE FREIN, ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.07.2014  Bulletin 2014/30**

(73) Proprietor: **Mitsubishi Electric Corporation
Tokyo 100-8310 (JP)**

(72) Inventor: **YAMADA, Hiroshi
Tokyo 100-8310 (JP)**

(74) Representative: **Sajda, Wolf E.
Meissner, Bolte & Partner GbR
Postfach 86 06 24
81633 München (DE)**

(56) References cited:
**EP-A1- 2 289 747      JP-A- H0 624 340
JP-A- H11 235 972      JP-A- 2000 211 487
JP-A- 2002 255 030**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a brake control apparatus, a brake control method, and a program.

Background Art

There exist railroad cars that apply braking force to wheels with the pressure of compressed air inside a brake cylinder (hereinafter, cylinder pressure). Such railroad cars are provided with a compressed air reservoir, a brake control valve, and a relay valve. The compressed air reservoir stores compressed air for the air brake.

The brake control valve controls the compressed air charged from the compressed air reservoir by opening and closing a charge valve and an discharge valve, and outputs a command pressure (hereinafter, AC pressure) to the relay valve. The relay valve supplies air pressure from the compressed air reservoir to the brake cylinder according to the command pressure output from the brake control valve.

Patent Literature 1 discloses a brake control apparatus provided in the above railroad car. The brake control apparatus of Patent Literature 1 acquires a deviation between an actual value and a target value of the AC pressure (hereinafter, AC pressure deviation), and sets the opening and closing of the charge valve and the discharge valve on the basis of a comparison result between the AC pressure deviation and a threshold value, thereby keeping the actual value of the AC pressure near the target value.

Citation List

Patent Literature

Patent Literature 1: Unexamined Japanese Patent Application Kokai Publication JP-A-2002-255 030

Summary of Invention

Technical Problem

Meanwhile, in the case of keeping the actual value of the AC pressure near the target value, the actual value of the AC pressure (hereinafter, actual AC pressure) rises in a first situation with a high target value of the AC pressure (hereinafter, target AC pressure) compared to a second situation with a low target AC pressure. Consequently, the pressure difference between the pressure inside the compressed air reservoir (hereinafter, SR pressure) and the actual AC pressure is lower in the first situation compared to the second situation.

However, in the brake control apparatus of Patent Literature 1, the above threshold value is kept constant regardless of the target AC pressure. For this reason, the opening and closing of the charge valve and the discharge valve does not change according to the target AC pressure. Consequently, in situations with different target AC pressures, the quantities per unit time of compressed air charged to the brake cylinder are not the same because of the discrepancy in the above pressure differences. As a result, in situations with difference target AC pressures, the time to make the cylinder pressure reach the target value cannot be equalized, and differences in brake response may occur.

The present invention has been devised in light of the above issues, and an object thereof is to provide a brake control apparatus, a brake control method, and a program capable of decreasing differences in response time in situations with different target AC pressures.

Solution to the Problem

In order to achieve the above object, a brake control apparatus according to the present invention is a brake control apparatus that controls a brake control valve including a charge valve that raises a command pressure for a relay valve charging compressed air to a brake cylinder, and an discharge valve that lowers the command pressure.

The brake control apparatus is equipped with a target value input device, an actual value input device, a deviation acquisition device, a threshold value acquisition device, a mode selector, a command signal generator, and a command signal output device. The target value input device accepts a target value of the command pressure for the relay valve (hereinafter, target AC pressure) as input. The actual value input device accepts an actual value of the command pressure for the relay valve (hereinafter, actual AC pressure) as input.

The deviation acquisition device acquires an AC pressure deviation by subtracting the target AC pressure from the actual AC pressure. The threshold value acquisition device acquires, on the basis of the target AC pressure, a first threshold value that varies according to the target AC pressure, a second threshold value equal to or greater than the first threshold value, a third threshold value equal to or greater than the second threshold value, and a fourth threshold value that is equal to or greater than the third threshold value and that varies according to the target AC pressure.

The mode selector selects a brake mode when the AC pressure deviation is less than or equal to the first threshold value, selects a fine-tuning brake mode when the AC pressure deviation exceeds the first threshold value but is less than or equal to the second threshold value, selects a hold mode when the AC pressure deviation exceeds the second threshold value but is less than or equal to the third threshold value, selects a fine-tuning release mode when the AC pressure deviation exceeds the third threshold value but is less than or equal to the fourth threshold value, and selects a release mode when the AC pressure deviation exceeds the fourth threshold value.

The command signal generator generates a command signal controlling the charge valve and the discharge valve according to the mode selected by the mode selector. The command signal output device outputs the command signal generated by the command signal generator to the brake control valve.

Advantageous Effects of the Invention

According to the present invention, it is possible to control a charge valve and an discharge valve according to a target AC pressure. For this reason, the time to make the cylinder pressure reach a target value may be kept constant in situations with different target AC pressures. Consequently, it becomes possible to potentially optimize braking without differences in brake response occurring in situations with different target AC pressures.

Brief Description of the Drawings

FIG. 1      is a block diagram illustrating an example of a configuration of a brake apparatus according to Embodiment 1 of the present invention;

FIG. 2      is a schematic diagram of a brake control valve according to Embodiment 1;

FIG. 3      is a physical schematic diagram of a brake control apparatus according to Embodiment 1;

FIG. 4      is a functional schematic diagram of a brake control apparatus according to Embodiment 1;

FIG. 5      is a diagram illustrating a control method conducted by a brake control apparatus;

FIG. 6      is a graph illustrating pressure ranges corresponding to respective combinations of the opening and closing of a charge valve and an discharge valve;

FIG. 7      is a graph illustrating relationships between an AC pressure deviation and a closed time of a charge valve according to Embodiment 2;

FIG. 8      is a graph illustrating relationships between an AC pressure deviation and an open time of an discharge valve according to Embodiment 2;

FIG. 9      is a functional schematic diagram of a brake control apparatus according to Embodiment 2 of the present invention; and

FIG. 10     is a graph illustrating relationships between an AC pressure deviation and the open and closed times of a charge valve and an discharge valve according to Embodiment 2.

Description of Embodiments

Embodiment 1

Hereinafter, Embodiment 1 of the present invention will be described. A brake control apparatus 1 according to Embodiment 1 of the present invention is provided with a brake apparatus 4 of a railroad car that applies braking force to a wheel 3 with the pressure of compressed air inside a brake cylinder 2 (hereinafter, cylinder pressure).

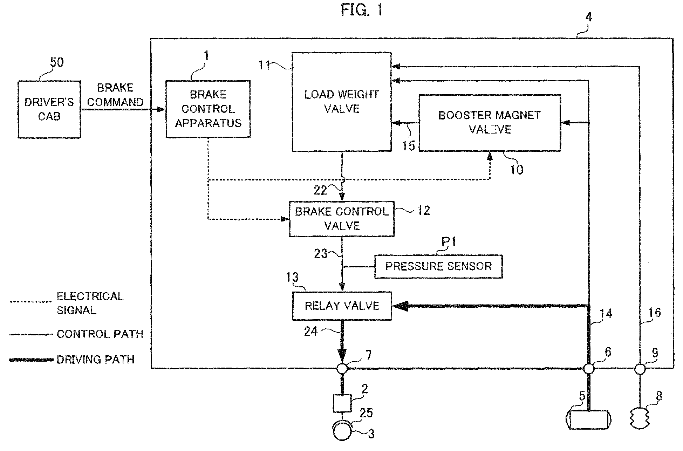

As illustrated in FIG. 1, the brake apparatus 4 is equipped with an inlet port 6 that allows compressed air to flow in from a compressed air reservoir 5, and a exhaust port 7 for charging compressed air to the brake cylinder 2. The brake apparatus 4 is also equipped with a load weight port 9 that allows compressed air to flow in as a load weight signal pressure from an air spring 8 that supports a truck. The load weight signal pressure indicates pressure variation according to load on the spring, including the weight of passengers.

The brake apparatus 4 is additionally equipped with a booster magnet valve 10, a load weight valve 11, a brake control valve 12, and a relay valve 13.

The primary side of the booster magnet valve 10 is connected to the inlet port 6 via a passage (air passage) 14. The secondary side of the booster magnet valve 10 is connected to the load weight valve 11 via a passage 15. In a demagnetized state, the booster magnet valve 10 closes the air passage, whereas in an excited state, the booster magnet valve 10 opens the air passage to allow air to flow from the primary side to the secondary side.

The load weight valve 11 is a mechanical valve, and is connected to the load weight port 9 via a load weight passage 16. In addition, the load weight valve 11 is connected to the inlet port 6 via the passage 14, and is connected to the secondary side of the booster magnet valve 10 via the passage 15. When the booster magnet valve 10 is in a closed (demagnetized) state, the load weight valve 11 supplies the secondary side with a pressure proportional to the load weight signal pressure from the air spring 8, or in other words, a first pressure that corresponds to the load of the truck. On the other hand, when the booster magnet valve 10 is in an open (excited state), the load weight valve 11 supplies the secondary side with a second pressure which is higher than the first pressure.

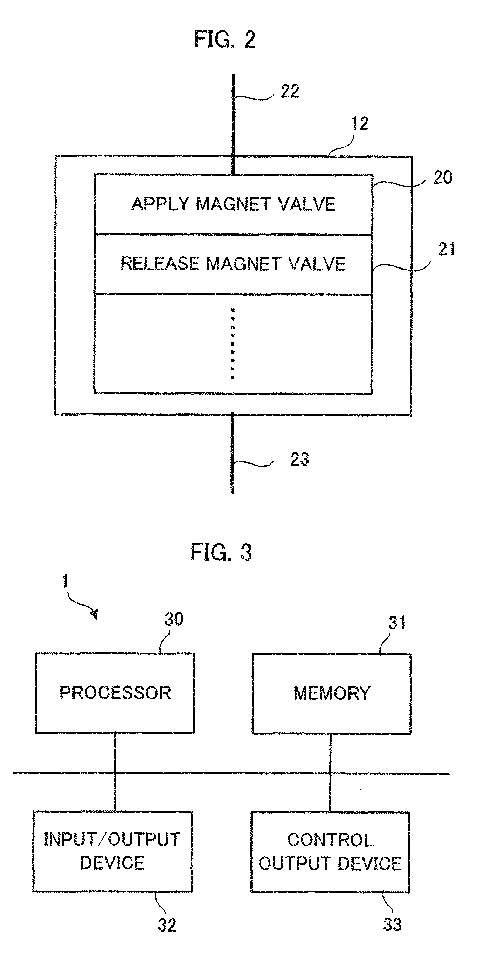

The primary side of the brake control valve 12 is connected to the secondary side of the load weight valve 11 via a passage 22, while the secondary side is connected to the primary side of the relay valve 13 via a passage 23. As illustrated in FIG. 2, the brake control valve 12 is made up of a apply magnet valve 20 (hereinafter, charge valve 20), and a release magnet valve 21 (hereinafter, discharge valve 21).

The brake control valve 12 controls the compressed air charged from the compressed air reservoir by opening and closing the charge valve 20 and the discharge valve 21, and outputs a command pressure (hereinafter, AC pressure) to the relay valve 13. In other words, the brake control valve 12 raises the AC pressure when the charge valve 20 is in the open state, and lowers the AC pressure when the discharge valve 21 is in the open state.

The relay valve 13 is a mechanical valve that supplies the brake cylinder 2 with air pressure according to the AC pressure in order to improve the responsiveness of air control. The primary side of the relay valve 13 is connected to the secondary side of the brake control valve 12 via the passage 23, and a pressure controlled by the brake control valve 12 is input thereinto. Meanwhile, the secondary side of the relay valve 13 is connected to the exhaust port 7 via a passage 24, and pressurized air is output to the brake cylinder 2 via the exhaust port 7.

A pressure sensor P1 is connected to the passage 23. The pressure sensor P1 measures the actual value of the AC pressure (hereinafter, actual AC pressure) output by the brake control valve 12, and outputs a signal indicating the actual AC pressure to the brake control apparatus 1.

The brake control apparatus 1 is an apparatus that controls solenoid valves such as the booster magnet valve 10 and the brake control valve 12 (the charge valve 20 and the discharge valve 21). As illustrated in FIG. 3, the brake control apparatus 1 is equipped with a processor 30, memory 31, an input/output device 32, and a control output device 33.

The processor 30 executes an operating program stored in the memory 31, and controls the operation of the booster magnet valve 10 and the brake control valve 12. For example, on the basis of a brake command from the driver's cab 50, the processor 30 computes a target value of the AC pressure (hereinafter, target AC pressure), outputs a command signal based on the target AC pressure or the like, and controls demagnetization and excitation of the charge valve 20 and the discharge valve 21. With this control, the charge valve 20/discharge valve 21 are set to one of the following modes (1) to (5).

(1) Brake mode, which opens the charge valve 20 and closes the discharge valve 21. In brake mode, compressed air is continuously charged to the brake cylinder 2. Consequently, the pressure of a bogie brake 25 pushing against the wheel 3 increases rapidly.

(2) Fine-tuning brake mode, which alternately opens and closes the charge valve 20 while also closing the discharge valve 21. In fine-tuning brake mode, compressed air is intermittently charged to the brake cylinder 2. Consequently, the pressure of the bogie brake 25 pushing against the wheel 3 increases gradually.

(3) Hold mode, which closes the charge valve 20 and the discharge valve 21. In hold mode, compressed air is neither charged to, nor discharged from, the brake cylinder 2. Consequently, the pressure of the bogie brake 25 pushing against the wheel 3 is kept constant.

(4) Fine-tuning release mode, which closes the charge valve 20 while also alternately opening and closing the discharge valve 21. In fine-tuning release mode, compressed air is intermittently discharged from the brake cylinder 2. Consequently, the pressure of the bogie brake 25 pushing against the wheel 3 lowers gradually.

(5) Release mode, which closes the charge valve 20 and also opens the discharge valve 21. In release mode, compressed air is continuously discharged from the brake cylinder 2. Consequently, the pressure of the bogie brake 25 pushing against the wheel 3 lowers rapidly.

The memory 31 stores an operating program executed by the processor 30, fixed data, and the like, and also functions as work memory of the processor 30.

The input/output device 32 accepts a brake command from the driver's cab 50 as input, accepts a signal indicating the actual AC pressure from the pressure sensor P1 as input, and supplies the input signals to the processor 30. The control output device 33 is made up of a driver circuit that outputs a command signal for controlling the brake control valve 12.

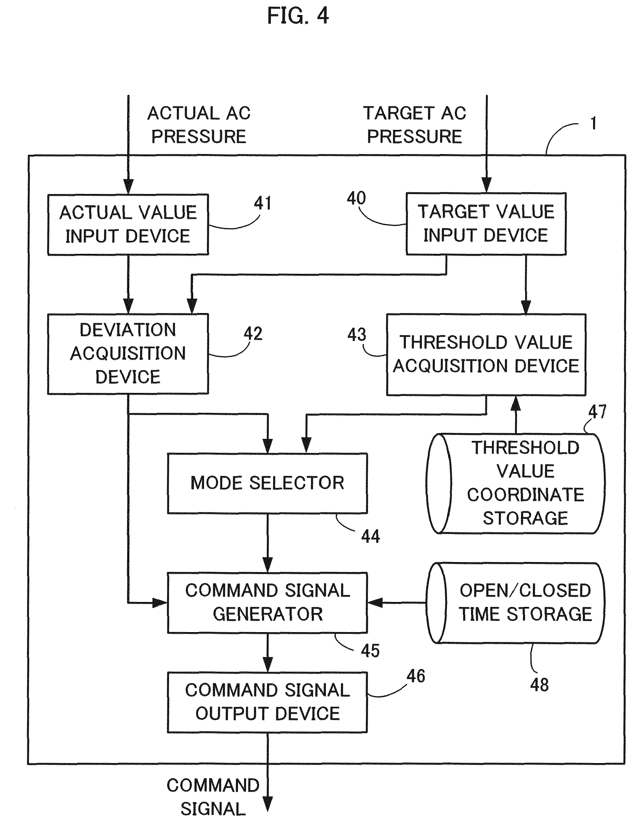

In the brake control apparatus 1, by having a program stored in the memory 31 be processed by the processor 30, a target value input device 40, an actual value input device 41, a deviation acquisition device 42, a threshold value acquisition device 43, a mode selector 44, a command signal generator 45, a command signal output device 46, threshold value coordinate storage 47, and open/closed time storage 48 are functionally configured, as illustrated in FIG. 4.

The target AC pressure computed by the processor 30 is input into the target value input device 40. The actual AC pressure indicated by the signal of the pressure sensor P1 is input into the actual value input device 41.

The deviation acquisition device 42 acquires the deviation between the target AC pressure and the actual AC pressure (hereinafter, AC pressure deviation) by subtracting the target AC pressure input into the target value input device 40 from the actual AC pressure input into the actual value input device 41.

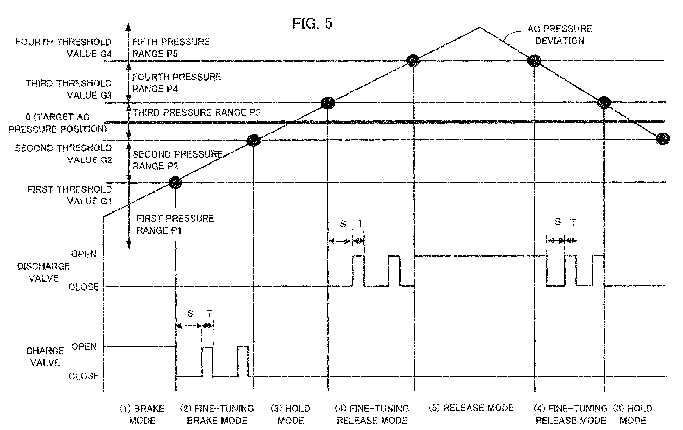

The threshold value acquisition device 43 acquires first to fourth threshold values G1 to G4 used to select a mode from (1) to (5) on the basis of the target AC pressure. FIG. 5 is a diagram illustrating relationships between the first to fourth threshold values G1 to G4 and the AC pressure deviation. FIG. 5 illustrates relationships between the first to fourth threshold values G1 to G4 and the AC pressure deviation for a situation in which the target AC pressure is a designated value.

The first threshold value G1 is a threshold value that distinguishes between a first pressure range P1 that corresponds to (1) brake mode, and a second pressure range P2 that corresponds to (2) fine-tuning brake mode. When the AC pressure deviation is less than or equal to the first threshold value G1, (1) brake mode is selected.

The second threshold value G2 is a threshold value that distinguishes between the second pressure range P2, and a third pressure range P3 that corresponds to (3) hold mode. When the AC pressure deviation exceeds the first threshold value G1 but is less than or equal to the second threshold value G2, (2) fine-tuning brake mode is selected.

The third threshold value G3 is a threshold value that distinguishes between the third pressure range P3, and a fourth pressure range P4 that corresponds to (4) fine-tuning release mode. When the AC pressure deviation exceeds the third threshold value G3 but is less than or equal to the fourth threshold value G4, (4) fine-tuning release mode is selected.

The fourth threshold value G4 is a threshold value that distinguishes between the fourth pressure range P4, and a fifth pressure range P5 that corresponds to (5) release mode. When the AC pressure deviation exceeds the fourth threshold value G4, (5) release mode is selected.

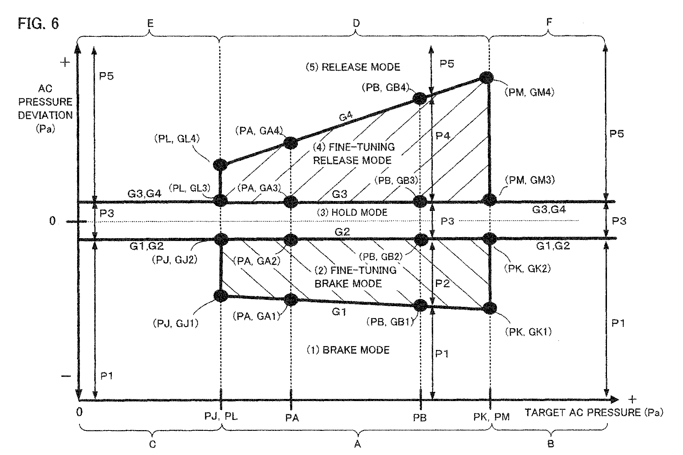

In the present embodiment, as illustrated in FIG. 6, the first threshold value G1 is computed as a value that varies according to the target AC pressure. The objective thereof is for (1) brake mode to be selected in a situation in which the target AC pressure is high and the difference between the SR pressure and the actual AC pressure decreases, and for (2) fine-tuning brake mode to be selected in a situation in which the target AC pressure is low and the difference between the SR pressure and the actual AC pressure increases.

Also, the fourth threshold value G4 is computed as a value that varies according to the target AC pressure. The objective thereof is for (1) release mode to be selected in the case in which the target AC pressure is low and the difference between the atmospheric pressure and the actual AC pressure is small, and for (2) fine-tuning release mode to be selected in the case in which the target AC pressure is high and the difference between the atmospheric pressure and the actual AC pressure is large.

Also, the first and second threshold values G1 and G2 are set so that fine-tuning brake mode is not selected when the target AC pressure is less than or equal to a lower bound value, or equal to or greater than a limit value.

Also, the third and fourth threshold values G3 and G4 are set so that fine-tuning release mode is not selected when the target AC pressure is less than or equal to a limit value, or equal to or greater than a limit value.

Stored in the threshold value coordinate storage 47 are first lower bound coordinate values (PJ, GJ1), second lower bound coordinate values (PJ, GJ2), third lower bound coordinate values (PL, GL3), fourth lower bound coordinate values (PL, GL4), first upper bound coordinate values (PK, GK1), second upper bound coordinate values (PK, GK2), third upper bound coordinate values (PM, GM3), and fourth upper bound coordinate values (PM, GM4). The first to fourth lower bound coordinate values and the first to fourth upper bound coordinate values are coordinate values in a coordinate system that takes the target AC pressure as a vertical axis and the AC pressure deviation as a horizontal axis, and are used in order to acquire the first to fourth threshold values G1 to G4.

The first dimension of the first and second lower bound coordinate values (PJ, GJ1) and (PJ, GJ2) indicates fine-tuning brake minimum AC pressure PJ, which is the lower bound target AC pressure that selects fine-tuning brake mode.

The second dimension of the first lower bound coordinate values (PJ, GJ1) indicates a minimum first threshold value GJ1 which is set as the first threshold value G1 in the case in which the target AC pressure is the fine-tuning brake minimum AC pressure PJ.

The second dimension of the second lower bound coordinate values (PJ, GJ2) indicates a minimum second threshold value GJ2 which is set as the second threshold value G2 in the case in which the target AC pressure is the fine-tuning brake minimum AC pressure PJ.

The first dimension of the first and second upper bound coordinate values (PK, GK1) and (PK, GK2) indicate a fine-tuning brake maximum AC pressure PK, which is the upper bound target AC pressure that selects fine-tuning brake mode.

The second dimension of the first upper bound coordinate values (PK, GK1) indicates a maximum first threshold value GK1 which is set as the first threshold value G1 in the case in which the target AC pressure is the fine-tuning brake maximum AC pressure PK.

The second dimension of the second upper bound coordinate values (PK, GK2) indicates a maximum second threshold value GK2 which is set as the second threshold value G2 in the case in which the target AC pressure is the fine-tuning brake maximum AC pressure PK.

The minimum first threshold value GJ1, the minimum second threshold value GJ2, the maximum first threshold value GK1, and the maximum second threshold value GK2 are respectively set to negative values.

The minimum second threshold value GJ2 is set to a value equal to or greater than the minimum first threshold value GJ1. The maximum second threshold value GK2 is set to a value equal to or greater than the maximum first threshold value GK1.

The maximum first threshold value GK1 is set to a value whose absolute value is greater than the minimum first threshold value GJ1. The minimum second threshold value GJ2 and the maximum second threshold value GK2 are set to equal values, for example.

The first dimension of the third and fourth lower bound coordinate values (PL, GL3) and (PL, GL4) indicate a fine-tuning release minimum AC pressure PL, which is the lower bound target AC pressure that selects fine-tuning release mode.

The second dimension of the third lower bound coordinate values (PL, GL3) indicates a minimum third threshold value GL3 which is set as the third threshold value G3 in the case in which the target AC pressure is the fine-tuning release minimum AC pressure PL.

The second dimension of the fourth lower bound coordinate values (PL, GL4) indicates a minimum fourth threshold value GL4 which is set as the fourth threshold value G4 in the case in which the target AC pressure is the fine-tuning release minimum AC pressure PL.

The first dimension of the third and fourth upper bound coordinate values (PM, GM3) and (PM, GM4) indicate a fine-tuning release maximum AC pressure PM, which is the upper bound target AC pressure that selects fine-tuning release mode.

The second dimension of the third upper bound coordinate values (PM, GM3) indicates a maximum third threshold value GM3 which is set as the third threshold value G3 in the case in which the target AC pressure is the fine-tuning release maximum AC pressure PM.

The second dimension of the fourth upper bound coordinate values (PM, GM4) indicates a maximum fourth threshold value GM4 which is set as the fourth threshold value G4 in the case in which the target AC pressure is the fine-tuning release maximum AC pressure PM.

The minimum third threshold value GL3, the minimum fourth threshold value GL4, the maximum third threshold value GM3, and the maximum fourth threshold value GM4 are respectively set to positive values. The minimum fourth threshold value GL4 is set to a value equal to or greater than the minimum third threshold value GL3.

The maximum fourth threshold value GM4 is set to a value equal to or greater than the maximum third threshold value GM3. The maximum fourth threshold value GM4 is set to a value whose absolute value is greater than the minimum fourth threshold value GL4. The minimum third threshold value GL3 and the maximum third threshold value GM3 are set to equal values, for example.

In addition, FIG. 6 illustrates a case in which the fine-tuning brake minimum AC pressure PJ and the fine-tuning release minimum AC pressure PL are equal, and also in which the fine-tuning brake maximum AC pressure PK and the fine-tuning release maximum AC pressure PM are equal. However, the fine-tuning brake minimum AC pressure PJ and the fine-tuning release minimum AC pressure PL, as well as the fine-tuning brake maximum AC pressure PK and the fine-tuning release maximum AC pressure PM, may be set to respectively different values.

The threshold value acquisition device 43 computes the first to fourth threshold values G1 to G4 on the basis of the target AC pressure input into the target value input device 40.

The first and second threshold values G1 and G2 are computed for each of ranges A to C distinguished by the fine-tuning brake minimum AC pressure PJ and the fine-tuning brake maximum AC pressure PK.

The range A is a range in which the target AC pressure is equal to or greater than the fine-tuning brake minimum AC pressure PJ, and less than or equal to the fine-tuning brake maximum AC pressure PK. The range B is a range in which the target AC pressure is greater than the fine-tuning brake maximum AC pressure PK. The range C is a range in which the target AC pressure is less than the fine-tuning brake minimum AC pressure PJ.

The third and fourth threshold values G3 and G4 are computed for each of ranges D to F distinguished by the fine-tuning release minimum AC pressure PL and the fine-tuning release maximum AC pressure PM.

The range D is a range in which the target AC pressure is equal to or greater than the fine-tuning release minimum AC pressure PL, and less than or equal to the fine-tuning release maximum AC pressure PM. The range E is a range in which the target AC pressure is less than the fine-tuning release minimum AC pressure PL. The range F is a range in which the target AC pressure is greater than the fine-tuning release maximum AC pressure PM.

First, a process by which the threshold value acquisition device 43 computes the first and second threshold values G1 and G2 in the range A will be described.

The threshold value acquisition device 43 computes a Formula 1 for a straight line passing through the upper bound coordinate values/lower bound coordinate values for each of the pair of the first lower bound coordinate values (PJ, GJ1) and the first upper bound coordinate values (PK, GK1), and the pair of the second lower bound coordinate values (PJ, GJ2) and the second upper bound coordinate values (PK, GK2). Formula 1 is a formula that takes the target AC pressure as an input variable, and leads to the first and second threshold values G1 and G2.

$$\text{xth threshold value Gx} = ((GKx - GJx) / (PK - PJ)) \times \text{target AC pressure}$$
$$+ (GJx \times PK - GKx \times PJ) / (PK - PJ) \quad \ldots \quad (\text{Formula 1})$$

In addition, the threshold value acquisition device 43 computes the first and second threshold values G1 and G2 by respectively substituting the target AC pressure input into the target value input device 40 into Formula 1 obtained from each pair of upper bound coordinate values/lower bound coordinate values. In the case in which the target AC pressure is PA, for example, GA1 is computed as the first threshold value G1 by performing the calculation

$$((GK1 - GJ1) / (PK - PJ)) \times PA + (GJ1 \times PK - GK1 \times PJ) / (PK - PJ)$$

for the pair of the first lower bound coordinate values (PJ, GJ1) and the first upper bound coordinate values (PK, GK1).

Also, in the case in which the target AC pressure is PB, first and second threshold values GB1 and GB2 are computed by substituting the target AC pressure PB into Formula 1 obtained from each pair of upper bound coordinate values/lower bound coordinate values.

According to the above calculation, the first and second threshold values G1 and G2 are computed by substituting the target AC pressure into a straight line Formula 1 that indicates a relationship between the target AC pressure and the first and second threshold values G1 and G2. For this reason, the first and second threshold values G1 and G2 are acquired as values that correspond to the target AC pressure.

In addition, by setting the minimum second threshold value GJ2 to a value equal to or greater than the minimum first threshold value GJ1, and by setting the maximum second threshold value GK2 to a value equal to or greater than the maximum first threshold value GK1, the second threshold value G2 is computed as a value that is equal to or greater than the first threshold value G 1.

Also, since the maximum first threshold value GK1 and the minimum first threshold value GJ1 are set to different values, the slope (GK1 - GJ1) / (PK - PJ) of the linear Formula 1 that leads to the first threshold value G1 does not become 0. Consequently, the first threshold value G1 is computed as a value that varies according to the target AC pressure.

Next, for the ranges B and C, the threshold value acquisition device 43 computes the first and second threshold values G1 and G2 as the same values. For example, for the range B, the first threshold value G1 and the second threshold value G2 are computed as values that match the maximum second threshold value GK2. For the range C, the first threshold value G1 and the second threshold value G2 are computed as values that match the minimum second threshold value GJ2.

Next, a process by which the threshold value acquisition device 43 computes the third and fourth threshold values G3 and G4 in the range D will be described.

The threshold value acquisition device 43 computes a Formula 2 for a straight line passing through the upper bound coordinate values/lower bound coordinate values for each of the pair of the third lower bound coordinate values (PL, GL3) and the third upper bound coordinate values (PM, GM3), and the pair of the fourth lower bound coordinate values (PL, GL4) and the fourth upper bound coordinate values (PM, GM4). Formula 2 is a formula that takes the target AC pressure as an input variable, and leads to the third and fourth threshold values G3 and G4.

$$\text{xth threshold value Gx} = ((GMx - GLx) / (PM - PL)) \times \text{target}$$
$$\text{AC pressure} + (GLx \times PM - GMx \times PL) / (PM - PL) \quad \ldots \quad (\text{Formula 2}).$$

In addition, the threshold value acquisition device 43 computes the third and fourth threshold values G3 and G4 by respectively substituting the target AC pressure input into the target value input device 40 into Formula 2 obtained from each pair of upper bound coordinate values/lower bound coordinate values. In the case in which the target AC pressure is PA, for example, GA4 is computed as the fourth threshold value G4 by performing the calculation ((GM4 - GL4) / (PM - PL)) × target AC pressure + (GL4 × PM - GM4 × PL) / (PM - PL) for the pair of the fourth lower bound coordinate values (PL, GL4) and the fourth upper bound coordinate values (PM, GM4).

Also, in the case in which the target AC pressure is PB, third and fourth threshold values GB3 and GB4 are computed by substituting the target AC pressure PB into Formula 2 obtained from each pair of upper bound coordinate values/lower bound coordinate values.

According to the above calculation, the third and fourth threshold values G3 and G4 are computed by substituting the target AC pressure into a linear Formula 2 that indicates a relationship between the target AC pressure and the third and fourth threshold values G3 and G4. For this reason, the third and fourth threshold values G3 and G4 are acquired as values that correspond to the target AC pressure.

Also, since the minimum third threshold value GL3 and the maximum third threshold value GM3 are positive values while the minimum second threshold value GJ2 and the maximum second threshold value GK2 are negative values, the third threshold value G3 is computed as a value that is equal to or greater than the second threshold value G2.

In addition, by setting the minimum fourth threshold value GL4 to a value equal to or greater than the minimum third threshold value GL3, and by setting the maximum fourth threshold value GM4 to a value equal to or greater than the maximum third threshold value GM3, the fourth threshold value G4 is computed as a value that is equal to or greater than the third threshold value G3.

Also, since the maximum fourth threshold value GM4 and the minimum fourth threshold value GL4 are set to different values, the slope (GM4 - GL4) / (PM - PL) of the linear Formula 2 that leads to the fourth threshold value G4 does not become 0. Consequently, the fourth threshold value G4 is computed as a value that varies according to the target AC pressure.

Next, for the ranges E and F, the threshold value acquisition device 43 computes the third and fourth threshold values G3 and G4 as the same values. For the range E, for example, the third and fourth threshold values G3 and G4 are computed as values that match the minimum third threshold value GL3. For the range F, for example, the third and fourth threshold values G3 and G4 are computed as values that match the maximum third threshold value GM3.

The mode selector 44 selects a mode from (1) to (5) as follows by comparing the AC pressure deviation acquired by the deviation acquisition device 42 to the first to fourth threshold values G1 to G4 acquired by the threshold value acquisition device 43.

In the case in which the AC pressure deviation is less than or equal to the first threshold value G1, (1) brake mode is selected. In the case in which the AC pressure deviation exceeds the first threshold value G1 but is less than or equal to the second threshold value G2, (2) fine-tuning brake mode is selected. In the case in which the AC pressure deviation exceeds the second threshold value G2 but is less than or equal to the third threshold value G3, (3) hold mode is selected. In the case in which the AC pressure deviation exceeds the third threshold value G3 but is less than or equal to the fourth threshold value G4, (4) fine-tuning release mode is selected. In the case in which the AC pressure deviation exceeds the fourth threshold value G4, (5) release mode is selected.

Note that in the case in which the target AC pressure is the range B, C, E, or F, then as above, the first and second threshold values G1 and G2 are computed as the same values, and in addition the third and fourth threshold values G3 and G4 are computed as the same values. For this reason, one of modes (1), (3), and (5) is selected rather than (2) fine-tuning brake mode or (4) fine-tuning release mode being selected.

The command signal generator 45 generates a command signal that controls the charge valve 20 and the discharge valve 21 as indicated in (1) to (5) below, according to mode selected by the mode selector 44.

(1) In the case in which (1) brake mode is selected, there is generated a command signal that applies control to open the charge valve 20 and also close the discharge valve 21.
(2) In the case in which (2) fine-tuning brake mode is selected, there is generated a command signal that applies control to alternately open and close the charge valve 20 at a determined time interval, and also close the discharge valve 21.
(3) In the case in which (3) hold mode is selected, there is generated a command signal that applies control to close the charge valve 20 and the discharge valve 21.
(4) In the case in which (4) fine-tuning release mode is selected, there is generated a command signal that closes the charge valve 20 and also alternately opens and closes the discharge valve 21 at a determined time interval.
(5) In the case in which (5) release mode is selected, there is generated a command signal that applies controls to close the charge valve 20 and also open the discharge valve 21.

Open/closed times T and S (FIG. 5) for the charge valve 20/discharge valve 21 are stored in the open/closed time storage 48. In the case in which (2) fine-tuning brake mode or (4) fine-tuning release mode is selected, the command signal generator 45 includes the open/closed times T and S stored in the open/closed time storage 48 in the command signal.

The command signal output device 46 outputs the command signal generated by the command signal generator 45 to the charge valve 20 and the discharge valve 21. As a result, the opening and closing of the charge valve 20 and the discharge valve 21 are controlled to be in a state indicated by the command signal.

According to the present embodiment, first to fourth threshold values G1 to G4 are acquired in correspondence with a target AC pressure, with the value rising in the order of the first threshold value G1, the second threshold value G2, the third threshold value G3, and the fourth threshold value G4. Subsequently, a charge valve 20 and an discharge valve 21 are controlled according to the magnitude relationships between the first to fourth threshold values G1 to G4 and an AC pressure deviation (a combination (mode) of opening and closing the charge valve 20 and the discharge valve 21 is selected).

According to the above, by appropriately setting the first to fourth threshold values G1 to G4, the following are possible. In the case in which the AC pressure deviation is negative, for example, (1) brake mode or (2) fine-tuning brake mode may be selected, and compressed air is charged to the brake cylinder 2.

Meanwhile, in the case in which the AC pressure deviation is near 0, (3) hold mode may be selected, and compressed air is neither charged to, nor discharged from, the brake cylinder 2. Meanwhile, in the case in which the AC pressure deviation is positive, (4) fine-tuning release mode or (5) release mode may be selected, and compressed air is discharged from the brake cylinder 2. In this way, it is possible to keep the actual AC pressure near the target AC pressure.

Additionally, in the case of conducting the above control, in a first situation with a high target AC pressure, the actual AC pressure rises compared to a second situation with a low target AC pressure. Consequently, in the first situation, the pressure difference between the pressure inside the compressed air reservoir (hereinafter, SR pressure) and the actual AC pressure decreases compared to the second situation.

Also, in the first situation, the pressure difference between the atmospheric pressure and the actual AC pressure increases compared to the second situation. With regard to this phenomenon, since according to the present embodiment the first and fourth threshold values G1 and G4 are acquired as values that vary according to the target AC pressure, it is possible to vary the combination of opening and closing the charge valve 20 and the discharge valve 21 according to the target AC pressure.

For example, consider the case in which the AC pressure deviation is negative in the first and second situations. In the first situation, (1) brake mode may be selected, and compressed air may be continuously charged to the brake cylinder 2. In the second situation, (2) fine-tuning brake mode may be selected, and compressed air may be intermittently charged to the brake cylinder 2. In this way, even if the pressure difference between the SR pressure and the actual AC pressure differs in the first and second situations, the quantity of compressed air per unit time that is charged to the brake cylinder 2 may be equalized. Consequently, the time to make the cylinder pressure rise to a target value may be kept constant.

Also, consider the case in which the AC pressure deviation is positive in the first and second situations. In the first situation, (5) release mode may be selected, and compressed air may be continuously discharged from the brake cylinder 2. In the second situation, (4) fine-tuning release mode may be selected, and compressed air may be intermittently discharged from the brake cylinder 2. In this way, even if the pressure difference between the atmospheric pressure and the actual AC pressure differs in the first and second situations, the quantity of compressed air per unit time that is discharged from the brake cylinder 2 may be equalized. Consequently, the time to make the cylinder pressure lower to a target value may be kept constant.

According to the present embodiment as above, the time to make the cylinder pressure reach a target value may be kept constant in situations with different target AC pressures. Consequently, it becomes possible to potentially optimize braking without differences in brake response occurring in situations with different target AC pressures.

Also, since the first and fourth threshold values G1 and G4 are acquired as values that vary according to the target AC pressure, the frequency at which fine-tuning brake mode and fine-tuning release mode are selected may be decreased compared to the case of maintaining the first threshold value G1 and the fourth threshold value G4 at the minimum first threshold value GJ1 and the maximum fourth threshold value GM4, for example. Consequently, since opening and closing of the charge valve 20 and the discharge valve 21 may be kept to a minimum, extended life of the charge valve 20 and the discharge valve 21 is realized.

Also, in the case in which the target AC pressure is in the range B, the first threshold value G1 and the second threshold value G2 are computed as the same values. For this reason, fine-tuning brake mode is not selected. For this reason, the opening and closing of the charge valve 20 is not wastefully switched in a situation in which the target AC pressure is high and the difference between the SR pressure and the actual AC pressure is small. For this reason, extended life of the charge valve 20 is realized.

Also, even in the case in which the target AC pressure is in the range C, the first threshold value G1 and the second threshold value G2 are computed as the same values, and fine-tuning brake mode is not selected. For this reason, since switching between opening and closing the charge valve 20 is even further kept to a minimum, extended life of the charge valve 20 is more reliably realized.

Also, in the case in which the target AC pressure is in the range E, the third threshold value G3 and the fourth threshold value G4 are computed as the same values. For this reason, fine-tuning release mode is not selected. For this reason, the opening and closing of the discharge valve 21 is not wastefully switched in a situation in which the target AC pressure is low and the difference between the atmospheric pressure and the actual AC pressure is small. For this reason, extended life of the discharge valve 21 is realized.

Also, even in the case in which the target AC pressure is in the range F, the third threshold value G3 and the fourth threshold value G4 are computed as the same values, and fine-tuning release mode is not selected. For this reason, since switching between opening and closing the discharge valve 21 is even further kept to a minimum, extended life of the discharge valve 21 is more reliably realized.

Also, in the case in which the target AC pressure is in the range A or D, the first to fourth threshold values G1 to G4 are computed by substituting the target AC pressure into a linear formula that indicates a relationship between the target AC pressure and the first to fourth threshold values G1 to G4.

As a result, it is possible to compute first to fourth threshold values G1 to G4 according to various values of the target AC pressure. Also, since the above linear formula is acquired using first to sixth upper bound coordinate values and first to sixth lower bound coordinate values stored in advance, by appropriately setting these coordinate values, the first to fourth threshold values G1 to G4 may be adjusted to desired values.

Note that in the case in which the target AC pressure is in the range A or D, the second and third threshold values G2 and G3 may also be acquired as values that vary according to the target AC pressure. In this way, it is possible to select between (2) fine-tuning brake mode and (3) hold mode, or between (3) hold mode and (4) fine-tuning release mode, according to the target AC pressure. In this case, since the slope of the linear Formula 1 that leads to the second threshold value G2 is made to be a numerical value other than 0, the minimum second threshold value GJ2 and the maximum second threshold value GK2 are set to different values.

In addition, since the slope of the linear Formula 2 that leads to the third threshold value G3 is made to be a numerical value other than 0, the minimum third threshold value GL3 and the maximum third threshold value GM3 are set to different values.

Also, although Embodiment 1 illustrates an example of computing the first to fourth threshold values G1 to G4 by substituting the target AC pressure into a linear formula that indicates a relationship between the target AC pressure and the first to fourth threshold values G1 to G4, the first to fourth threshold values G1 to G4 do not necessarily need to have a linear relationship with the target AC pressure.

Also, in Embodiment 1, although a mode from (1) to (5) is selected by comparing the AC pressure deviation to the first to fourth threshold values G1 to G4, the method of selecting a mode from (1) to (5) is not limited thereto. For example, a mode from (1) to (5) may also be selected by comparing a deviation between the actual value and target value of the cylinder pressure (cylinder pressure deviation) to fifth to eighth threshold values acquired in correspondence with the cylinder pressure.

In this case, the processor 30 acquires a target value of the cylinder pressure (target cylinder pressure) on the basis of a brake command. Also, a pressure sensor that measures the actual value of the cylinder pressure (actual cylinder pressure) is installed in the passage 24. The pressure sensor outputs a signal indicating the actual cylinder pressure to the brake control apparatus 1.

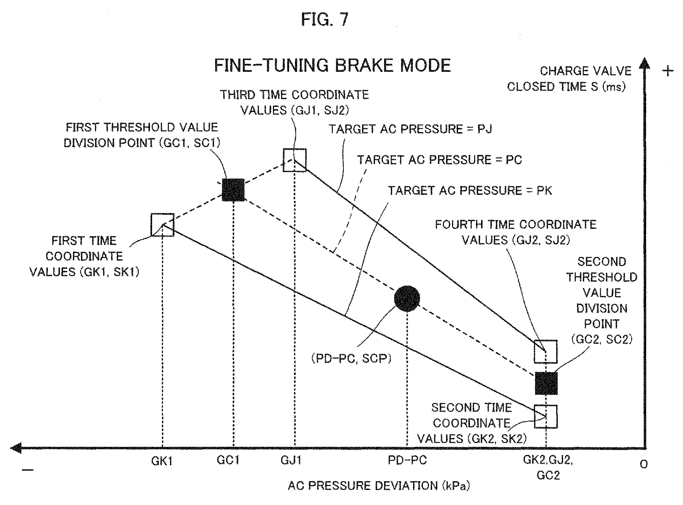

In addition, the target cylinder pressure is input into the target value input device 40 illustrated in FIG. 7, and the actual cylinder pressure is input into the actual value input device 41. The deviation acquisition device 42 acquires the cylinder pressure deviation by subtracting the target cylinder pressure from the actual cylinder pressure.

The threshold value acquisition device 43 acquires a fifth threshold value that varies according to the target cylinder pressure, a sixth threshold value equal to or greater than the fifth threshold value, a seventh threshold value equal to or greater than the sixth threshold value, and an eighth threshold value which is equal to or greater than the seventh threshold value and which varies according to the target cylinder pressure, as threshold values for comparison against the cylinder pressure deviation.

The mode selector 44 compares the cylinder pressure deviation acquired by the deviation acquisition device 42 to the fifth to eighth threshold values acquired by the threshold value acquisition device 43, and selects a mode from (1) to (5) as follows.

In the case in which the cylinder pressure deviation is less than or equal to the fifth threshold value, (1) brake mode is selected. In the case in which the cylinder pressure deviation exceeds the fifth threshold value but is less than or equal to the sixth threshold value, (2) fine-tuning brake mode is selected. In the case in which the cylinder pressure deviation exceeds the sixth threshold value but is less than or equal to the seventh threshold value, (3) hold mode is selected.

In the case in which the cylinder pressure deviation exceeds the seventh threshold value but is less than or equal to the eighth threshold value, (4) fine-tuning release mode is selected. In the case in which the cylinder pressure deviation exceeds the eighth threshold value, (5) release mode is selected. Even configured as above, advantageous effects similar to Embodiment 1 are obtained.

Embodiment 2

Next, Embodiment 2 of the present invention will be described. In Embodiment 2, when (2) fine-tuning brake mode or (4) fine-tuning release mode is selected, the time interval over which to open and close the discharge valve 21 and the time interval over which to open and close the charge valve 20 are varied according to the target AC pressure and the AC pressure deviation.

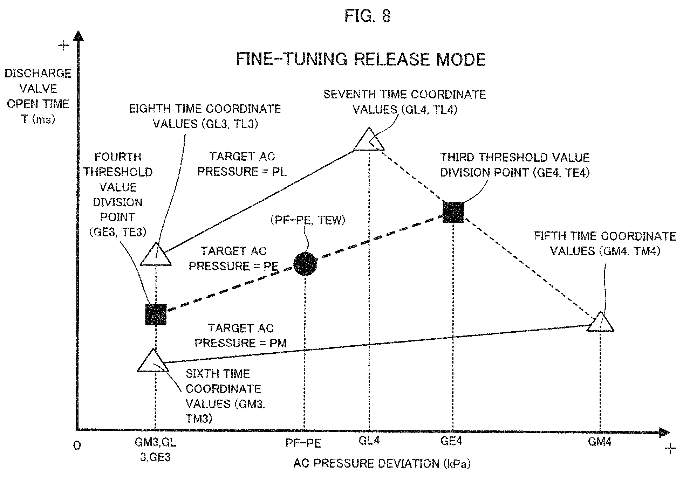

FIG. 7 is a diagram illustrating relationships between the AC pressure deviation and the closed time S of the charge valve 20 according to Embodiment 2. FIG. 8 is a diagram illustrating relationships between the AC pressure deviation and the open time T of the discharge valve 21 according to Embodiment 2.

In the present embodiment, the open/closed time of the charge valve 20 is set according to the target AC pressure and the AC pressure deviation so that the time of charging compressed air to the brake cylinder 2 becomes longer in the case of a high target AC pressure (the case of a small difference between the SR pressure and the actual AC pressure), and also so that the time of charging compressed air to the brake cylinder 2 becomes shorter in the case of a low target AC pressure (the case of a large difference between the SR pressure and the actual AC pressure).

In addition, the open/closed time of the discharge valve 21 is set according to the target AC pressure and the AC pressure deviation so that the time of discharging compressed air from the brake cylinder 2 becomes longer in the case of a low target AC pressure (the case of a small difference between the atmospheric pressure and the actual AC pressure), and also so that the time of discharging compressed air from the brake cylinder 2 becomes shorter in the case of a high target AC pressure (the case of a large difference between the atmospheric pressure and the actual AC pressure).

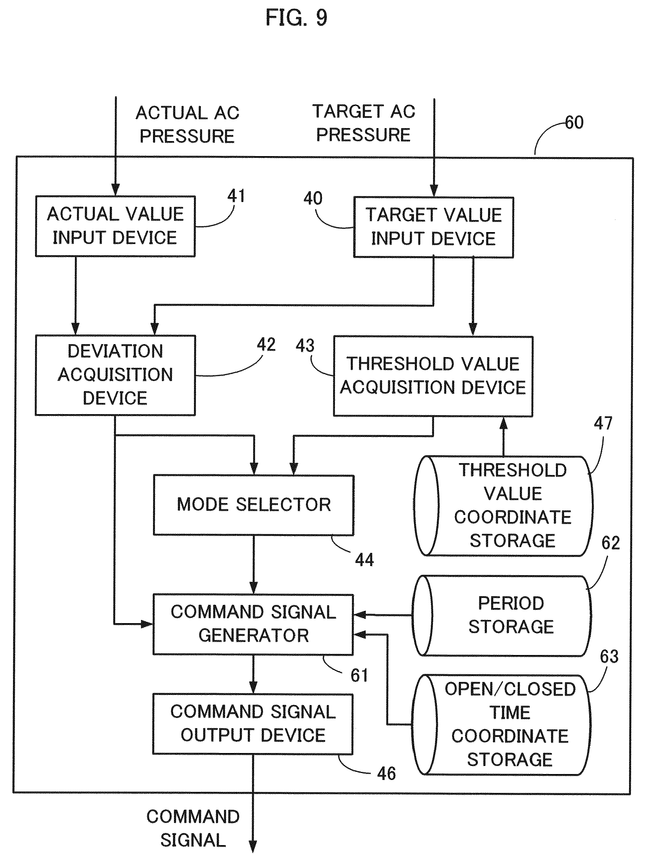

In the brake control apparatus 60 of Embodiment 2, by having a program stored in the memory 31 by processed by the processor 30, a target value input device 40, an actual value input device 41, a deviation acquisition device 42, a threshold value acquisition device 43, a mode selector 44, a command signal generator 61, a command signal output device 46, threshold value coordinate storage 47, period storage 62, and open/closed time coordinate storage 63 are functionally configured, as illustrated in FIG. 9.

The target value input device 40, the actual value input device 41, the deviation acquisition device 42, the threshold value acquisition device 43, the mode selector 44, the command signal output device 46, and the threshold value coordinate storage 47 are similar to Embodiment 1. Consequently, the command signal generator 61, the period storage 62, and the open/closed time coordinate storage 63 will be described hereinafter.

Stored in the period storage 62 are open/closed time periods W and Z for the charge valve 20/discharge valve 21 in the case in which (2) fine-tuning brake mode or (4) fine-tuning release mode is selected.

Stored in the open/closed time coordinate storage 63 are the first to fourth time coordinate values illustrated in FIG. 7, and the fifth to eighth time coordinate values illustrated in FIG. 8. The first to fourth time coordinate values are coordinate values in a coordinate system that takes the target AC pressure as a vertical axis and the closed time S of the charge valve 20 as a horizontal axis, and are used in order to set the closed time S of the charge valve 20. The fifth to eighth time coordinate values are coordinate values in a coordinate system that takes the target AC pressure as a vertical axis and the open time T of the discharge valve 21 as a horizontal axis, and are used in order to set the open time T of the discharge valve 21.

The first dimension of the first time coordinate values indicates the maximum first threshold value GK1, which is the first threshold value G1 at the fine-tuning brake maximum AC pressure PK, which is the upper bound target AC pressure that selects fine-tuning brake mode.

The second dimension of the first time coordinate values indicates a first closed time SK1, which is the closed time S of the charge valve 20 in the case of fine-tuning brake mode at the maximum first threshold value GK1.

The first dimension of the second time coordinate values indicates the maximum second threshold value GK2, which is the second threshold value G2 at the fine-tuning brake maximum AC pressure PK.

The second dimension of the second time coordinate values indicates a second closed time SK2, which is the closed time S of the charge valve 20 in the case of fine-tuning brake mode at the maximum second threshold value GK2.

The first dimension of the third time coordinate values indicates the minimum first threshold value GJ1, which is the first threshold value G1 at the fine-tuning brake minimum AC pressure PJ, which is the lower bound target AC pressure that selects fine-tuning brake mode.

The second dimension of the third time coordinate values indicates a third closed time SJ1, which is the closed time S of the charge valve 20 in the case of fine-tuning brake mode at the minimum first threshold value GJ1.

The first dimension of the fourth time coordinate values indicates the minimum second threshold value GJ2, which is the second threshold value G2 at the fine-tuning brake minimum AC pressure PJ.

The second dimension of the fourth time coordinate values indicates a fourth closed time SJ2, which is the closed time S of the charge valve 20 in the case of fine-tuning brake mode at the minimum second threshold value GJ2.

The first dimension of the fifth time coordinate values indicates the maximum fourth threshold value GM4, which is the fourth threshold value G4 at the fine-tuning release maximum AC pressure PM, which is the upper bound target AC pressure that selects fine-tuning release mode.

The second dimension of the fifth time coordinate values indicates a first open time TM4, which is the open time T of the discharge valve 21 in the case of fine-tuning release mode at the maximum fourth threshold value GM4.

The first dimension of the sixth time coordinate values indicates the maximum third threshold value GM3, which is the third threshold value G3 at the fine-tuning release maximum AC pressure PM.

The second dimension of the sixth time coordinate values indicates a second open time TM3, which is the open time T of the discharge valve 21 in the case of fine-tuning release mode at the maximum third threshold value GM3.

The first dimension of the seventh time coordinate values indicates the minimum fourth threshold value GL4, which is the fourth threshold value G4 at the fine-tuning release minimum AC pressure PL, which is the lower bound target AC pressure that selects fine-tuning release mode.

The second dimension of the seventh time coordinate values indicates a third open time TL4, which is the open time T of the discharge valve 21 in the case of fine-tuning release mode at the minimum fourth threshold value GL4.

The first dimension of the eighth time coordinate values indicates the minimum third threshold value GL3, which is the third threshold value G3 at the fine-tuning release minimum AC pressure PL.

The second dimension of the eighth time coordinate values indicates a fourth open time TL3, which is the open time T of the discharge valve 21 in the case of fine-tuning release mode at the minimum third threshold value GL3.

When (2) fine-tuning brake mode or (4) fine-tuning release mode is selected, the command signal generator 61 computes the closed time S of the charge valve 20 and the open time T of the discharge valve 21 on the basis of the target AC pressure and the AC pressure deviation.

First, the case in which (2) fine-tuning brake mode is selected will be described. Note that the following will describe, as an example, the case in which a target AC pressure "PC" is input into the target value input device 40, a actual AC pressure "PD" is input into the actual value input device 41, and an AC pressure deviation "PD - PC" is computed by the deviation acquisition device 42.

First, the command signal generator 61 computes the coordinate values (GC1, SC1) of a first threshold value division point at which a line segment joining the point of the first time coordinate values (maximum first threshold value GK1, first closed time SK1) and the point of the third time coordinate values (minimum first threshold value GJ1, third closed time SJ1) is proportionally divided by the target AC pressure (PC).

In addition, the command signal generator 61 computes the coordinate values (GC2, SC2) of a second threshold value division point at which a line segment joining the point of the second time coordinate values (maximum second threshold value GK2, second closed time SK2) and the point of the fourth time coordinate values (minimum second threshold value GJ2, fourth closed time SJ2) is proportionally divided by the target AC pressure (PC).

Furthermore, the command signal generator 61 computes a Formula 3 for a straight line joining the first threshold value division point (GC1, SC1) and the second threshold value division point (GC2, SC2) as a relational formula between the closed time S of the charge valve 20 and the AC pressure deviation. Formula 3 is a formula that takes the AC pressure deviation as an input variable, and leads to the closed time S of the charge valve 20.

$$\text{Closed time S of charge valve 20} = ((SC1 - SC2) / (GC1 - GC2)) \times$$
$$\text{AC pressure deviation} + (SC2 \times GC1 - SC1 \times GC2) / (GC1 - GC2) \quad \dots$$
$$\dots \text{(Formula 3)}.$$

Furthermore, by substituting the AC pressure deviation "PD - PC" acquired by the deviation acquisition device 42 into Formula 3, the command signal generator 61 computes a closed time SCP of the charge valve 20 corresponding to the situation in which the target AC pressure is "PC" and the AC pressure deviation is "PD - PC".

Furthermore, the command signal generator 61 computes an open time TCP (TCP = W - SCP) of the charge valve 20 by subtracting the computed closed time SCP from the period W of the charge valve 20 stored in the period storage 62.

According to the above calculations, a linear Formula 3 that indicates a relationship between the closed time S of the charge valve 20 and the AC pressure deviation is computed from the above first to fourth time coordinate values and the target AC pressure.

Subsequently, the closed time SCP of the charge valve 20 is computed by substituting the AC pressure deviation into the linear Formula 3, and in addition, the open time TCP of the charge valve 20 is computed by subtracting the closed time S from the period W stored in advance. According to this calculation, the ratio of the time TCP over which the charge valve 20 is opened versus the time SCP over which the charge valve 20 is closed varies according to the target AC pressure and the AC pressure deviation.

Furthermore, the command signal generator 61 generates a command signal that includes the computed closed time SCP and open time TCP. As a result, the command signal is output by the command signal output device 46, and the open/closed times T and S of the charge valve 20 are controlled to the times TCP and SCP.

Next, the case in which (4) fine-tuning release mode is selected will be described. Note that the following will describe, as an example, the case in which a target AC pressure "PE" is input into the target value input device 40, a actual AC pressure "PF" is input into the actual value input device 41, and an AC pressure deviation "PF - PE" is computed by the deviation acquisition device 42.

First, the command signal generator 61 computes the coordinate values (GE4, TE4) of a third threshold value division point at which a line segment joining the point of the fifth time coordinate values (maximum fourth threshold value GM4, first open time TM4) and the point of the seventh time coordinate values (minimum fourth threshold value GL4, third open time TL4) is proportionally divided by the target AC pressure (PE).

In addition, the command signal generator 61 computes the coordinate values (GE3, TE3) of a fourth threshold value division point at which a line segment joining the point of the sixth time coordinate values (maximum third threshold value GM3, second open time TM3) and the point of the eighth time coordinate values (minimum third threshold value GL3, fourth open time TL3) is proportionally divided by the target AC pressure (PE).

Furthermore, the command signal generator 61 computes a Formula 4 for a straight line joining the third threshold value division point (GE4, TE4) and the fourth threshold value division point (GE3, TE3) as a relational formula between the open time T of the discharge valve 21 and the AC pressure deviation. Formula 4 is a formula that takes the AC pressure deviation as an input variable, and leads to the open time T of the discharge valve 21.

$$\text{Open time T of discharge valve } 21 = ((TE4 - TE3) / (GE4 - GE3)) \times$$
$$\text{AC pressure deviation} + (TE3 \times GE4 - TE4 \times GE3) / (GE4 - GE3) \quad \dots$$
$$\dots \text{(Formula 4).}$$

Furthermore, by substituting the AC pressure deviation "PF - PE" acquired by the deviation acquisition device 42 into Formula 4, the command signal generator 61 computes an open time TEW of the discharge valve 21 corresponding to the situation in which the target AC pressure is "PE" and the AC pressure deviation is "PF - PE".

Furthermore, the command signal generator 61 computes a closed time SEW (SEW = Z - TEW) of the discharge valve 21 by subtracting the open time TEW of the discharge valve 21 from the period Z stored in the period storage 62.

According to the above calculations, a linear Formula 4 that indicates a relationship between the open time T of the discharge valve 21 and the AC pressure deviation is computed from the above fifth to eighth time coordinate values and the target AC pressure. Subsequently, the open time TEW of the discharge valve 21 is computed by substituting the AC pressure deviation into the linear Formula 4, and in addition, the closed time SEW of the discharge valve 21 is computed by subtracting the open time TEW from the period Z stored in advance. According to this calculation, the ratio of the time TEW over which the discharge valve 21 is opened versus the time SEW over which the discharge valve 21 is closed varies according to the target AC pressure and the AC pressure deviation.

Furthermore, the command signal generator 61 generates a command signal that includes the computed open time TEW and closed time SEW. As a result, the command signal is output by the command signal output device 46, and the open/closed times T and S of the discharge valve 21 are controlled to the times TEW and SEW.

According to the present embodiment, when (2) fine-tuning brake mode or (4) fine-tuning release mode is selected, the open/closed times T and S of the charge valve 20 and the discharge valve 21 are set on the basis of the target AC pressure and the AC pressure deviation. Consequently, it is possible to control the time over which to charge compressed air to the brake cylinder 2, and the time over which to discharge compressed air from the brake cylinder 2, according to the target AC pressure and the AC pressure deviation.

For this reason, in the case in which the target AC pressure is high or the absolute value of the AC pressure deviation is large, it is possible to keep the cylinder pressure near a target value pressure by setting longer open times T for the charge valve 20 and the discharge valve 21. For example, in the case in which the AC pressure deviation is a negative value with a large absolute value (target AC pressure > actual AC pressure), setting a longer open time T for the charge valve 20 enables charge of the required quantity of compressed air to the brake cylinder 2. Also, in the case in which the AC pressure deviation is a positive value with a large absolute value (actual AC pressure > target AC pressure), setting a longer open time T for the discharge valve 21 enables discharge of the required quantity of compressed air from the brake cylinder 2.

Meanwhile, in the case in which the target AC pressure is low or the absolute value of the AC pressure deviation is small, it is possible to prevent the cylinder pressure from diverging greatly from a target value by setting shorter open times T for the charge valve 20 and the discharge valve 21. For example, in the case in which the AC pressure deviation is a negative value with a small absolute value (target AC pressure > actual AC pressure), setting a shorter open time T for the charge valve 20 prevents the charge of more compressed air than is necessary to the brake cylinder 2. Also, in the case in which the AC pressure deviation is a positive value with a small absolute value (actual AC pressure > target AC pressure), setting a shorter open time T for the discharge valve 21 prevents the discharge of more compressed air than is necessary from the brake cylinder 2.

In addition, the closed time S of the charge valve 20 and the open time T of the discharge valve 21 are computed by substituting the AC pressure deviation into linear formulas that indicate a relationship between the AC pressure deviation and the open/closed times of the charge valve 20/discharge valve 21. For this reason, open/closed times T and S may be computed according to various values of AC pressure deviation.

Also, the above linear formulas are acquired by using first to eighth time coordinate values stored in advance. Consequently, by appropriately setting the first to eighth time coordinate values, the open/closed times T and S of the charge valve 20/discharge valve 21 may be adjusted to desired values.

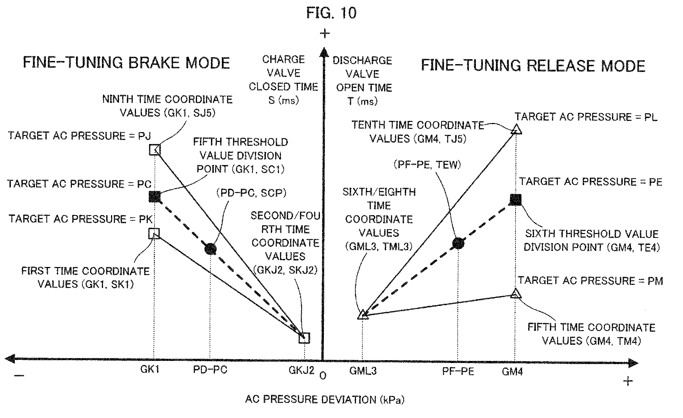

Note that in Embodiment 2, as illustrated on the left side of FIG. 10, in the case in which the second time coordinate values and the fourth time coordinate values are equal, the closed time S of the charge valve 20 may be computed as follows in order to reduce the calculation load.

Stored in the open/closed time coordinate storage 63 are ninth time coordinate values illustrated on the left side of FIG. 10, instead of the third time coordinate values illustrated in FIG. 7.

The first dimension of the ninth time coordinate values indicates the maximum first threshold value GK1 included in the first dimension of the first time coordinate values.

The second dimension of the ninth time coordinate values indicates a fifth closed time SJ5 of the charge valve 20 that corresponds to a situation in which the target AC pressure is the fine-tuning brake minimum AC pressure PJ, and the AC pressure deviation is the maximum first threshold value GK1.

In this case, the command signal generator 61 computes the coordinate values (GK1, SC1) of a fifth threshold value division point at which a line segment joining the point of the first time coordinate values (maximum first threshold value GK1, first closed time SK1) and the point of the ninth time coordinate values (maximum first threshold value GK1, fifth closed time SJ5) is proportionally divided by the target AC pressure (PC).

Furthermore, the command signal generator 61 computes a Formula 5 for a straight line joining the fifth threshold value division point (GC1, SC1 ) and the second and fourth time coordinate values (GKJ2, SKJ2) as a relational formula between the closed time S of the charge valve 20 and the AC pressure deviation. Formula 5 is a formula that takes the AC pressure deviation as an input variable, and leads to the closed time S of the charge valve 20.

$$\text{Closed time S of charge valve 20} = ((SC1 - SKJ2) / (GK1 - GKJ2)) \times$$

$$\text{AC pressure deviation} + (SKJ2 \times GK1 - SC1 \times GKJ2) / (GK1 - GKJ2) \quad ...$$

$$...(\text{Formula 5}).$$

Furthermore, by substituting the AC pressure deviation "PD - PC" acquired by the deviation acquisition device 42 into Formula 5, the command signal generator 61 computes the closed time SCP of the charge valve 20 corresponding to the situation in which the target AC pressure is "PC" and the AC pressure deviation is "PD - PC".

Also, as illustrated on the right side of FIG. 10, in the case in which the sixth time coordinate values and the eighth time coordinate values are equal, the open time T of the discharge valve 21 may be computed as follows in order to reduce the calculation load for the open time T of the discharge valve 21.

Stored in the open/closed time coordinate storage 63 are tenth time coordinate values illustrated in FIG. 10, instead of the seventh time coordinate values illustrated in FIG. 8.

The first dimension of the tenth time coordinate values indicates the maximum fourth threshold value GM4 included in the first dimension of the fifth time coordinate values.

The second dimension of the tenth time coordinate values indicates a fifth open time TJ5 of the discharge valve 21 that corresponds to a situation in which the target AC pressure is the fine-release brake minimum AC pressure PL, and the AC pressure deviation is the maximum fourth threshold value GM4.

First, the command signal generator 61 computes the coordinate values (GM4, TE4) of a sixth threshold value division point at which a line segment joining the point of the fifth time coordinate values (maximum fourth threshold value GM4, first open time TM4) and the point of the tenth time coordinate values (maximum fourth threshold value GM4, fifth open time TJ5) is proportionally divided by the target AC pressure (PE).

Furthermore, the command signal generator 61 computes a Formula 6 for a straight line joining the sixth threshold value division point (GM4, TE4) and the sixth and eighth time coordinate values (GML3, TML3) as a relational formula between the open time T of the discharge valve 21 and the AC pressure deviation. Formula 6 is a formula that takes the AC pressure deviation as an input variable, and leads to the open time T of the discharge valve 21.

$$\text{Open time T of discharge valve } 21 = (TE4 - TML3) / (GM4 - GML3) \times$$

$$\text{AC pressure deviation} + (TML3 \times GM4 - TE4 \times GML3) / (GM4 - GML3) \quad \dots$$

$$\dots \text{(Formula 6)}.$$

Furthermore, by substituting the AC pressure deviation "PF - PE" acquired by the deviation acquisition device 42 into Formula 6, the command signal generator 61 computes the open time TEW of the discharge valve 21 corresponding to the situation in which the target AC pressure is "PE" and the AC pressure deviation is "PF - PE".

In addition, instead of indicating the open/closed times T and S of the charge valve 20/discharge valve 21, the first to tenth time coordinate values may also indicate duty ratios that express the ratios of the open/closed times T and S of the charge valve 20/discharge valve 21. In this case, the command signal generator 61 acquires, from the first to tenth time coordinate values and the target AC pressure input into the target value input device 40, linear formulas that indicate a relationship between the AC pressure deviation in the case in which the target AC pressure is the input value, and the duty ratios.

Furthermore, the command signal generator 61 computes the duty ratios of the open/closed times T and S by substituting the AC pressure deviation computed by the deviation acquisition device 42 into the linear formulas. Subsequently, by multiplying the periods W and Z by the computed duty ratios, the command signal generator 61 computes the open/closed times T and S of the charge valve 20/discharge valve 21.

In addition, the means and method of conducting the various processes by the brake control apparatus 1 and 60 of the present embodiments are also realizable by any of a dedicated hardware circuit or a programmed computer. The above program may be provided via a computer-readable recording medium, such as a flexible disk or CD-ROM, for example, and may also be provided online via a network such as the Internet. In this case, a program recorded onto the computer-readable recording medium is ordinarily transferred and stored to a storage device such as a hard disk. Also, the above program may be provided as an independent application, or embedded in the software of an apparatus as a function of that apparatus.

The embodiments disclosed herein are exemplary in all respects and should not be construed as being limiting. The scope of the present invention is indicated by the claims rather than the foregoing description, and all modifications within the scope of the claims and their equivalents are intended to be included therein.

Industrial Applicability

The present invention may be suitably implemented in a brake apparatus equipped with a charge valve for charging compressed air to a brake cylinder, and an discharge valve for discharging compressed air from the brake cylinder.

List of Reference Signs

| | |
|---|---|
| 1 | Brake control apparatus |
| 2 | Brake cylinder |
| 3 | Wheel |
| 4 | Brake apparatus |
| 6 | Inlet port |
| 7 | Exhaust port |
| 9 | Load weight port |
| 10 | Booster magnet valve |
| 11 | Load weight valve |
| 12 | Brake control valve |
| 13 | Relay valve |
| 14 | Passage |
| 15 | Passage |
| 16 | Load weight passage |
| 20 | Charge valve |
| 21 | Discharge valve |
| 22 | Passage |
| 23 | Passage |

24    Passage
25    Bogie brake
30    Processor
31    Memory
32    Input/output device
33    Control output device
40    Target value input device
41    Actual value input device
42    Deviation acquisition device
43    Threshold value acquisition device
44    Mode selector
45    Command signal generator
46    Command signal output device
47    Threshold value coordinate storage
48    Open/closed time storage
50    Driver's cab
60    Brake control apparatus
61    Command signal generator
62    Period storage
63    Open/closed time coordinate storage
P1    Pressure sensor

**Claims**

1.  A brake control apparatus (1, 60) that is adapted to control a brake control valve (12) including a charge valve (20) that is adapted to raise a command pressure for a relay valve (13) charging compressed air to a brake cylinder (2), and an discharge valve (21) that is adapted to lower the command pressure, comprising:

    - a target value input device (40) that is adapted to accept a target value of the command pressure for the relay valve (13), hereinafter, target AC pressure, as input;
    - an actual value input device (41) that is adapted to accept an actual value of the command pressure for the relay valve (13), hereinafter, actual AC pressure, as input;
    - a deviation acquisition device (42) that is adapted to acquire an AC pressure deviation by subtracting the target AC pressure from the actual AC pressure;
    - a threshold value acquisition device (43) that is adapted to acquire, on the basis of the target AC pressure, a first threshold value that varies according to the target AC pressure, a second threshold value equal to or greater than the first threshold value, a third threshold value equal to or greater than the second threshold value, and a fourth threshold value that is equal to or greater than the third threshold value and that varies according to the target AC pressure;
    - a mode selector (44) that is adapted to select a brake mode when the AC pressure deviation is less than or equal to the first threshold value, select a fine-tuning brake mode when the AC pressure deviation exceeds the first threshold value but is less than or equal to the second threshold value, select a hold mode when the AC pressure deviation exceeds the second threshold value but is less than or equal to the third threshold value, select a fine-tuning release mode when the AC pressure deviation exceeds the third threshold value but is less than or equal to the fourth threshold value, and select a release mode when the AC pressure deviation exceeds the fourth threshold value;
    - a command signal generator (45, 61) that is adapted to generate a command signal controlling the charge valve (20) and the discharge valve (21) according to the mode selected by the mode selector (44); and
    - a command signal output device (46) that is adapted to output the command signal generated by the command signal generator (45, 61) to the brake control valve (12).

2.  The brake control apparatus (1, 60) according to claim 1,
    **characterized in that** the command signal generator (45, 61)

    - when the brake mode is selected, is adapted to generate a command signal that applies control to open the charge valve (20), and also close the discharge valve (21),

- when the fine-tuning brake mode is selected, is adapted to generate a command signal that applies control to alternately open and close the charge valve (20) at a fixed time interval, and also close the discharge valve (21),
- when the hold mode is selected, is adapted to generate a command signal that applies control to close the charge valve (20) and the discharge valve (21),
- when the fine-tuning release mode is selected, is adapted to generate a command signal that applies control to alternately open and close the discharge valve (21) at a fixed time interval, and also close the charge valve (20), and
- when the release mode is selected, is adapted to generate a command signal that applies control to open the discharge valve (21), and also close the charge valve (20).

3. The brake control apparatus (60) according to claim 2,
   **characterized in that** in the fixed time interval for alternately opening and closing the charge valve (20) when the fine-tuning brake mode is selected, the ratio of time when the charge valve (20) is opened versus the time when the charge valve (20) is closed varies according to the target AC pressure and the AC pressure deviation.

4. The brake control apparatus (60) according to claim 3,
   comprising fine-tuning brake time storage (62, 63) that is adapted to store

   - a maximum first threshold value, being the first threshold value at a fine-tuning brake maximum AC pressure defined as the target AC pressure at an upper bound that selects the fine-tuning brake mode, and a first closed time, being a closed time of the charge valve (20) in the case of the fine-tuning brake mode at the maximum first threshold value,
   - a maximum second threshold value, being the second threshold value at the fine-tuning brake maximum AC pressure, and a second closed time, being a closed time of the charge valve (20) in the case of the fine-tuning brake mode at the maximum second threshold value,
   - a minimum first threshold value, being the first threshold value at the fine-tuning brake minimum AC pressure defined as the target AC pressure at a lower bound that selects the fine-tuning brake mode, and a third closed time, being a closed time of the charge valve (20) in the case of the fine-tuning brake mode at the minimum first threshold value, and
   - a minimum second threshold value, being the second threshold value at the fine-tuning brake minimum AC pressure, and a fourth closed time, being a closed time of the charge valve (20) in the case of the fine-tuning brake mode at the minimum second threshold value,

   wherein the command signal generator (61)

   - in a first coordinate system taking the target AC pressure as a vertical axis and the closed time of the charge valve (20) as a horizontal axis, is adapted to specify a first threshold value division point by proportionally dividing by the target AC pressure a line segment joining a point specified by the maximum first threshold value and the first closed time to a point specified by the minimum first threshold value and the third closed time,
   - in the first coordinate system, is adapted to specify a second threshold value division point by proportionally dividing by the target AC pressure a line segment joining a point specified by the maximum second threshold value and the second closed time to a point specified by the minimum second threshold value and the fourth closed time, and
   - using a straight line joining the first threshold value division point and the second threshold value division point, is adapted to compute a closed time of the charge valve (20) in the fine-tuning brake mode from the target AC pressure and the AC pressure deviation.

5. The brake control apparatus (60) according to any one of claims 2 to 4, **characterized in that** in the fixed time interval for alternately opening and closing the discharge valve (21) when the fine-tuning release mode is selected, the ratio of time when the discharge valve (21) is opened versus the time when the discharge valve (21) is closed varies according to the target AC pressure and the AC pressure deviation.

6. The brake control apparatus (60) according to claim 5,
   comprising fine-tuning release time storage (62, 63) that is adapted to store

   - a maximum fourth threshold value, being the fourth threshold value at a fine-tuning release maximum AC pressure defined as the target AC pressure at an upper bound that selects the fine-tuning release mode, and a first open time, being an open time of the discharge valve (21) in the case of selecting the fine-tuning release mode at the maximum fourth threshold value,

- a maximum third threshold value, being the third threshold value at the fine-tuning release maximum AC pressure, and a second open time, being an open time of the discharge valve (21) in the case of selecting the fine-tuning release mode at the maximum third threshold value,

- a minimum fourth threshold value, being the fourth threshold value at a fine-tuning release minimum AC pressure defined as the target AC pressure at a lower bound that selects the fine-tuning release mode, and a third open time, being an open time of the discharge valve (21) in the case of selecting the fine-tuning release mode at the minimum fourth threshold value, and

- a minimum third threshold value, being the third threshold value at the fine-tuning release minimum AC pressure, and a fourth open time, being an open time of the discharge valve (21) in the case of selecting the fine-tuning release mode at the minimum third threshold value,

wherein the command signal generator (61)

- in a second coordinate system taking the target AC pressure as a vertical axis and the open time of the discharge valve (21) as a horizontal axis, is adapted to specify a third threshold value division point by proportionally dividing by the target AC pressure a line segment joining a point specified by the maximum fourth threshold value and the first open time to a point specified by the minimum fourth threshold value and the third open time,

- in the second coordinate system, is adapted to specify a fourth threshold value division point by proportionally dividing by the target AC pressure a line segment joining a point specified by the maximum third threshold value and the second open time to a point specified by the minimum third threshold value and the fourth open time, and

- using a straight line joining the third threshold value division point and the fourth threshold value division point, is adapted to compute an open time of the discharge valve (21) in the fine-tuning release mode from the target AC pressure and the AC pressure deviation.

7. The brake control apparatus (1, 60) according to any one of claims 1 to 6, **characterized in that** the first threshold value and the second threshold value match when the target AC pressure is greater than a fine-tuning brake maximum AC pressure defined as the target AC pressure at an upper bound that selects the fine-tuning brake mode, and **in that** the third threshold value and the fourth threshold value match when the target AC pressure is less than a fine-tuning release minimum AC pressure defined as the target AC pressure at a lower bound that selects the fine-tuning release mode.

8. The brake control apparatus (1, 60) according to any one of claims 1 to 7, **characterized in that** the first threshold value and the second threshold value match when the target AC pressure is less than a fine-tuning brake minimum AC pressure defined as the target AC pressure at a lower bound that selects the fine-tuning brake mode, and **in that** the third threshold value and the fourth threshold value match when the target AC pressure is greater than a fine-tuning release maximum AC pressure defined as the target AC pressure at an upper bound that selects the fine-tuning release mode.

9. The brake control apparatus (1, 60) according to any one of claims 1 to 8, **characterized in that** the threshold value acquisition device (43)
is adapted to compute the first threshold value by substituting the target AC pressure into a linear formula that indicates a relationship between the target AC pressure and the first threshold value, and
is adapted to compute the fourth threshold value by substituting the target AC pressure into a linear formula that indicates a relationship between the target AC pressure and the fourth threshold value.

10. The brake control apparatus (1, 60) according to claim 9,
comprising threshold value coordinate storage (47) that is adapted to store

- a fine-tuning brake minimum AC pressure, being the target AC pressure at a lower bound that selects the fine-tuning brake mode, and a minimum first threshold value, being the first threshold value at the fine-tuning brake minimum AC pressure,

- a fine-tuning brake maximum AC pressure, being the target AC pressure at an upper bound that selects the fine-tuning brake mode, and a maximum first threshold value, being the first threshold value at the fine-tuning brake maximum AC pressure,

- a fine-tuning release minimum AC pressure, being the target AC pressure at a lower bound that selects the fine-tuning release mode, and a minimum fourth threshold value, being the fourth threshold value at the fine-tuning release minimum AC pressure, and
- a fine-tuning release maximum AC pressure, being the target AC pressure at an upper bound that selects the fine-tuning release mode, and a maximum fourth threshold value, being the fourth threshold value at the fine-tuning release maximum AC pressure,

wherein the threshold value acquisition device (43)

- in a third coordinate system that takes the target AC pressure as a vertical axis and the AC pressure deviation as a horizontal axis, is adapted to treat a straight line joining a point specified by the fine-tuning brake minimum AC pressure and the minimum first threshold value to a point specified by the fine-tuning brake maximum AC pressure and the maximum first threshold value as a linear formula indicating a relationship between the target AC pressure and the first threshold value, and
- in the third coordinate system, is adapted to treat a straight line joining a point specified by the fine-tuning release minimum AC pressure and the minimum fourth threshold value to a point specified by the fine-tuning release maximum AC pressure and the maximum fourth threshold value as a linear formula indicating a relationship between the target AC pressure and the fourth threshold value.

11. A brake control method that controls a brake control valve (12) including a charge valve that raises a command pressure for a relay valve (13) charging compressed air to a brake cylinder (2), and an discharge valve (21) that lowers the command pressure,
**characterized by** comprising the following steps:

- a target value input step that accepts a target value of the command pressure for the relay valve (13), hereinafter, target AC pressure, as input;
- an actual value input step that accepts an actual value of the command pressure for the relay valve (13), hereinafter, actual AC pressure, as input;
- a deviation acquisition step that acquires an AC pressure deviation by subtracting the target AC pressure from the actual AC pressure;
- a threshold value acquisition step that acquires, on the basis of the target AC pressure, a first threshold value that varies according to the target AC pressure, a second threshold value equal to or greater than the first threshold value, a third threshold value equal to or greater than the second threshold value, and a fourth threshold value that is equal to or greater than the third threshold value and that varies according to the target AC pressure;
- a mode selecting step that selects a brake mode when the AC pressure deviation is less than or equal to the first threshold value, selects a fine-tuning brake mode when the AC pressure deviation exceeds the first threshold value but is less than or equal to the second threshold value, selects a hold mode when the AC pressure deviation exceeds the second threshold value but is less than or equal to the third threshold value, selects a fine-tuning release mode when the AC pressure deviation exceeds the third threshold value but is less than or equal to the fourth threshold value, and selects a release mode when the AC pressure deviation exceeds the fourth threshold value;
- a command signal generating step that generates a command signal controlling the charge valve and the discharge valve (21) according to the mode selected by the mode selecting step; and
- a command signal output step that outputs the command signal generated by the command signal generating step to the brake control valve (12).

12. A program that controls a brake control valve (12) including a charge valve that is adapted to raise a command pressure for a relay valve (13) charging compressed air to a brake cylinder (2), and an discharge valve (21) that is adapted to lower the command pressure,
the program causing a computer to function as:

- target value input means that accepts a target value of the command pressure for the relay valve (13), hereinafter, target AC pressure, as input;
- actual value input means that accepts an actual value of the command pressure for the relay valve (13, hereinafter, actual AC pressure, as input;
- deviation acquisition means that acquires an AC pressure deviation by subtracting the target AC pressure from the actual AC pressure;
- threshold value acquisition means that acquires, on the basis of the target AC pressure, a first threshold value that varies according to the target AC pressure, a second threshold value equal to or greater than the first threshold value, a third threshold value equal to or greater than the second threshold value, and a fourth threshold value that is equal to or greater than the third threshold value and that varies according to the target AC pressure;
- mode selecting means that selects a brake mode when the AC pressure deviation is less than or equal to the first threshold value, selects a fine-tuning brake mode when the AC pressure deviation exceeds the first threshold value but is less than or equal to the second threshold value, selects a hold mode when the AC pressure deviation exceeds the second threshold value but is less than or equal to the third threshold value, selects a fine-tuning release mode when the AC pressure deviation exceeds the third threshold value but is less than or equal to the fourth threshold value, and selects a release mode when the AC pressure deviation exceeds the fourth threshold value;
- command signal generating means that generates a command signal controlling the charge valve and the discharge valve (21) according to the mode selected by the mode selecting means; and
- command signal output means that outputs the command signal generated by the command signal generating means to the brake control valve (12).

**Patentansprüche**

1. Bremssteuervorrichtung (1, 60), die dazu ausgelegt ist, ein Bremssteuerventil (12) zu steuern, das ein Ladeventil (20), welches dazu ausgelegt ist, einen Steuerdruck für ein Servoventil (13) zu erhöhen, das einen Bremszylinder (2) mit Druckluft beaufschlagt, sowie ein Entladeventil (21) aufweist, das dazu ausgebildet ist, den Steuerdruck zu verringern,
wobei die Vorrichtung Folgendes aufweist:

   - eine Sollwert-Eingabeeinheit (40), die dazu ausgelegt ist, einen Sollwert eines Steuerdrucks für das Servoventil (13), nachstehend als Soll-AC-Druck bezeichnet, als Eingabe zu empfangen;
   - eine Istwert-Eingabeeinheit (41), die dazu ausgelegt ist, einen Istwert des Steuerdrucks für das Servoventil (13), nachstehend als Ist-AC-Druck bezeichnet, als Eingabe zu empfangen;
   - eine Abweichungs-Erfassungseinheit (42), die dazu ausgelegt ist, eine AC-Druckabweichung zu erfassen, und zwar durch Subtrahieren des Soll-AC-Drucks von dem Ist-AC-Druck;
   - eine Schwellenwert-Erfassungseinheit (43), die dazu ausgelegt ist, auf der Basis des Soll-AC-Drucks Folgendes zu erfassen: einen ersten Schwellenwert, der in Abhängigkeit von dem Soll-AC-Druck variiert, einen zweiten Schwellenwert, der gleich dem oder größer als der erste Schwellenwert ist, einen dritten Schwellenwert, der gleich dem oder größer als der zweite Schwellenwert ist, und einen vierten Schwellenwert, der gleich dem oder größer als der dritte Schwellenwert ist und der in Abhängigkeit von dem Soll-AC-Druck variiert;
   - einen Modenselektor (44), der dazu ausgelegt ist, einen Bremsmodus zu wählen, wenn die AC-Druckabweichung kleiner als die oder gleich dem ersten Schwellenwert ist, einen Feinabstimmungs-Bremsmodus zu wählen, wenn die AC-Druckabweichung den ersten Schwellenwert überschreitet, aber kleiner als der oder gleich dem zweiten Schwellenwert ist, einen Haltemodus zu wählen, wenn die AC-Druckabweichung den zweiten Schwellenwert überschreitet, aber kleiner als der oder gleich dem dritten Schwellenwert ist, einen Feinabstimmungs-Freigabemodus zu wählen, wenn die AC-Druckabweichung den dritten Schwellenwert überschreitet, aber kleiner als der oder gleich dem vierten Schwellenwert ist, und einen Freigabemodus zu wählen, wenn die AC-Druckabweichung den vierten Schwellenwert überschreitet;
   - einen Befehlssignal-Generator (45, 61), der dazu ausgelegt ist, ein Befehlssignal zu erzeugen, welches das Ladeventil (20) und das Entladeventil (21) in Abhängigkeit von dem von dem Modenselektor (44) gewählten Modus steuert; und
   - eine Befehlssignal-Ausgabeeinheit (46), die dazu ausgelegt ist, das Befehlssignal, das von dem Befehlssignal-Generator (45, 61) erzeugt worden ist, an das Bremssteuerventil (12) abzugeben.

2. Bremssteuervorrichtung (1, 60) nach Anspruch 1,
**dadurch gekennzeichnet,**
**dass** der Befehlssignal-Generator (45, 61)

   - wenn der Bremsmodus gewählt ist, dazu ausgelegt ist, ein Befehlssignal zu erzeugen, das eine Steuerung zum Öffnen des Ladeventils (20) ausübt und außerdem das Entladeventil (21) schließt,
   - wenn der Feinabstimmungs-Bremsmodus gewählt ist, dazu ausgelegt ist, ein Befehlssignal zu erzeugen, das eine Steuerung zum abwechselnden Öffnen und Schließen des Ladeventils (20) in einem festgelegten Zeitintervall ausübt und das außerdem das Entladeventil (21) schließt,
   - wenn der Haltemodus gewählt ist, dazu ausgelegt ist, ein Befehlssignal zu erzeugen, das eine Steuerung zum Schließen des Ladeventils (20) und des Entladeventils (21) ausübt,

- wenn der Feinabstimmungs-Freigabemodus gewählt ist, dazu ausgelegt ist, ein Befehlssignal zu erzeugen, das eine Steuerung zum abwechselnden Öffnen und Schließen des Entladeventils (21) in einem festgelegten Zeitintervall ausübt und das außerdem das Ladeventil (20) schließt, und

- wenn der Freigabemodus gewählt ist, dazu ausgelegt ist, ein Befehlssignal zu erzeugen, das eine Steuerung zum Öffnen des Entladeventils (21) ausübt und das außerdem das Ladeventil (20) schließt.

**3.** Bremssteuervorrichtung (60) nach Anspruch 2,
**dadurch gekennzeichnet,**
**dass** in dem festgelegten Zeitintervall zum abwechselten Öffnen und Schließen des Ladeventils (20), wenn der Feinabstimmungs-Bremsmodus gewählt ist, das Zeitverhältnis, wann das Ladeventil (20) geöffnet ist, gegenüber der Zeit, in der das Ladeventil (20) geschlossen ist, in Abhängigkeit von dem Soll-AC-Druck und der AC-Druckabweichung variiert.

**4.** Bremssteuervorrichtung (60) nach Anspruch 3,
die einen Feinabstimmungs-Bremszeitspeicher (62, 63) aufweist, der dazu ausgelegt ist, Folgendes zu speichern:

- einen maximalen ersten Schwellenwert, welcher der erste Schwellenwert bei einem Feinabstimmungs-Brems-Maximal-AC-Druck ist, der als Soll-AC-Druck bei einer oberen Grenze definiert ist, welche den Feinabstimmungs-Bremsmodus wählt, sowie eine erste Schließzeit, welche eine Schließzeit des Ladeventils (20) im Falle des Feinabstimmungs-Bremsmodus bei dem maximalen ersten Schwellenwert ist;
- einen maximalen zweiten Schwellenwert, der der zweite Schwellenwert bei dem Feinabstimmungs-Brems-Maximal-AC-Druck ist, sowie eine zweite Schließzeit, welche eine Schließzeit des Ladeventils (20) in dem Falle des Feinabstimmungs-Bremsmodus bei dem maximalen zweiten Schwellenwert ist;
- einen minimalen ersten Schwellenwert, welcher der erste Schwellenwert bei dem Feinabstimmungs-Brems-Minimal-AC-Druck ist, der als Soll-AC-Druck bei einer unteren Grenze definiert ist, welche den Feinabstimmungs-Bremsmodus wählt, sowie eine dritte Schließzeit, welche eine Schließzeit des Ladeventils (20) in dem Falle des Feinabstimmungs-Bremsmodus bei dem minimalen ersten Schwellenwert ist; und
- einen minimalen zweiten Schwellenwert, welcher der zweite Schwellenwert bei dem Feinabstimmungs-Brems-Minimal-AC-Druck ist, sowie eine vierte Schließzeit, welche eine Schließzeit des Ladeventils (20) in dem Falle des Feinabstimmungs-Bremsmodus bei dem minimalen zweiten Schwellenwert ist;

wobei der Bremssignal-Generator (61)

- in einem ersten Koordinatensystem, das den Soll-AC-Druck als vertikale Achse und die Schließzeit des Ladeventils (20) als horizontale Achse verwendet, dazu ausgelegt ist, einen ersten Schwellenwert-Teilungspunkt zu spezifizieren, in dem ein Liniensegment, welches einen Punkt, der durch den maximalen ersten Schwellenwert und die erste Schließzeit bestimmt ist, mit einem Punkt verbindet, der durch den minimalen ersten Schwellenwert und die dritte Schließzeit bestimmt ist, proportional durch den Soll-AC-Druck geteilt wird,
- in dem ersten Koordinatensystem dazu ausgelegt ist, einen zweiten Schwellenwert-Teilungspunkt zu spezifizieren, in dem ein Liniensegment, welches einen Punkt, der durch den maximalen zweiten Schwellenwert und die zweite Schließzeit bestimmt ist, mit einem Punkt verbindet, der durch den minimalen zweiten Schwellenwert und die vierte Schließzeit bestimmt ist, proportional durch den Soll-AC-Druck geteilt wird; und
- unter Verwendung einer geraden Linie, welche den ersten Schwellenwert-Teilungspunkt mit dem zweiten Schwellenwert-Teilungspunkt verbindet, dazu ausgelegt ist, eine Schließzeit des Ladeventils (20) in dem Feinabstimmungs-Bremsmodus aus dem Soll-AC-Druck und der AC-Druckabweichung zu berechnen.

**5.** Bremssteuervorrichtung (60) nach einem der Ansprüche 2 bis 4,
**dadurch gekennzeichnet,**
**dass** das festgelegte Zeitintervall zum abwechselten Öffnen und Schließen des Entladeventils (21), wenn der Feinabstimmungs-Freigabemodus gewählt ist, das Zeitverhältnis, wann das Entladeventil (21) geöffnet ist, gegenüber der Zeit, in der das Entladeventil (21) geschlossen ist, in Abhängigkeit von dem Soll-AC-Druck und der AC-Druckabweichung variiert.

**6.** Bremssteuervorrichtung (60) nach Anspruch 5,
die einen Feinabstimmungs-Freigabezeitspeicher (62, 63) aufweist, der dazu ausgelegt ist, Folgendes zu speichern:

- einen maximalen vierten Schwellenwert, welcher der vierte Schwellenwert bei einem Feinabstimmungs-Freigabe-Maximal-AC-Druck ist, der als Soll-AC-Druck bei einer oberen Grenze definiert ist, welche den Feinabstimmungs-Freigabemodus wählt, sowie eine erste Öffnungszeit, welche eine Öffnungszeit des Entladeventils (21) in dem Falle der Wahl des Feinabstimmungs-Freigabemodus bei dem maximalen vierten Schwellenwert ist;
- einen maximalen dritten Schwellenwert, welcher der dritte Schwellenwert bei dem Feinabstimmungs-Freigabe-Maximal-AC-Druck ist, sowie eine zweite Öffnungszeit, welche eine Öffnungszeit des Entladeventils (21) in dem Falle der Wahl des Feinabstimmungs-Freigabemodus bei dem maximalen dritten Schwellenwert ist;
- einen minimalen vierten Schwellenwert, welcher der vierte Schwellenwert bei einem Feinabstimmungs-Freigabe-Minimal-AC-Druck ist, der als Soll-AC-Druck bei einer unteren Grenze definiert ist, welche den Feinabstimmungs-Freigabemodus wählt, sowie eine dritte Öffnungszeit, welche eine Öffnungszeit des Entladeventils (21) in dem Falle der Wahl des Feinabstimmungs-Freigabemodus bei dem minimalen vierten Schwellenwert ist; und
- einen minimalen dritten Schwellenwert, welcher der dritte Schwellenwert bei dem Feinabstimmungs-Freigabe-Minimal-AC-Druck ist, sowie eine vierte Öffnungszeit, welche eine Öffnungszeit des Entladeventils (21) in dem Falle der Wahl des Feinabstimmungs-Freigabemodus bei dem minimalen dritten Schwellenwert ist;

wobei der Befehlssignal-Generator (61)

- in einem zweiten Koordinatensystem, welches den Soll-AC-Druck als vertikale Achse und die Öffnungszeit des Entladeventils (21) als horizontale Achse verwendet, dazu ausgelegt ist, einen dritten Schwellenwert-Teilungspunkt zu spezifizieren, in dem ein Liniensegment, welches einen Punkt, der durch den maximalen vierten Schwellenwert und die erste Öffnungszeit bestimmt ist, mit einem Punkt verbindet, der durch den minimalen vierten Schwellenwert und die dritte Öffnungszeit bestimmt ist, proportional durch den Soll-AC-Druck teilt;
- in dem zweiten Koordinatensystem dazu ausgelegt ist, einen vierten Schwellenwert-Teilungspunkt zu spezifizieren, in dem ein Liniensegment, welches einen Punkt, der durch den maximalen dritten Schwellenwert und die zweite Öffnungszeit bestimmt ist, mit einem Punkt verbindet, der durch den minimalen dritten Schwellenwert und die vierte Öffnungszeit bestimmt ist, proportional durch den Soll-AC-Druck teilt; und
- unter Verwendung einer geraden Linie, welche den dritten Schwellenwert-Teilungspunkt und den vierten Schwellenwert-Teilungspunkt verbindet, dazu ausgelegt ist, eine Öffnungszeit des Entladeventils (21) in dem Feinabstimmungs-Freigabemodus aus dem Soll-AC-Druck und der AC-Druckabweichung zu berechnen.

7. Bremssteuervorrichtung (1, 60) nach einem der Ansprüche 1 bis 6,
**dadurch gekennzeichnet,**
**dass** der erste Schwellenwert und der zweite Schwellenwert übereinstimmen, wenn der Soll-AC-Druck größer ist als ein Feinabstimmungs- Brems-Maximal-AC-Druck, der als Soll-AC-Druck bei einer oberen Grenze definiert ist, welche den Feinabstimmungs-Bremsmodus wählt,
und **dass** der dritte Schwellenwert und der vierte Schwellenwert übereinstimmen, wenn der Soll-AC-Druck geringer ist als ein Feinabstimmungs-Freigabe-Minimal-AC-Druck, der als Soll-AC-Druck bei einer unteren Grenze definiert ist, welche den Feinabstimmungs-Freigabemodus wählt.

8. Bremssteuervorrichtung (1, 60) nach einem der Ansprüche 1 bis 7,
**dadurch gekennzeichnet,**
**dass** der erste Schwellenwert und der zweite Schwellenwert übereinstimmen, wenn der Soll-AC-Druck geringer ist als ein Feinabstimmungs-Brems-Minimal-AC-Druck, der als Soll-AC-Druck bei einer unteren Grenze definiert ist, welche den Feinabstimmungs-Bremsmodus wählt,
und **dass** der dritte Schwellenwert und der vierte Schwellenwert übereinstimmen, wenn der Soll-AC-Druck größer ist als ein Feinabstimmungs-Freigabe-Maximal-AC-Druck, der als Soll-AC-Druck bei einer oberen Grenze definiert ist, welche den Feinabstimmungs-Freigabemodus wählt.

9. Bremssteuervorrichtung (1, 60) nach einem der Ansprüche 1 bis 8,
**dadurch gekennzeichnet,**
**dass** die Schwellenwert-Erfassungseinheit (43)

- dazu ausgelegt ist, den ersten Schwellenwert zu berechnen, und zwar durch Einsetzen des Soll-AC-Drucks in eine lineare Formel, welche eine Relation zwischen dem Soll-AC-Druck und dem ersten Schwellenwert angibt, und
- dazu ausgelegt ist, den vierten Schwellenwert zu berechnen, und zwar durch Einsetzen des Soll-AC-Drucks in eine lineare Formel, welche eine Relation zwischen dem Soll-AC-Druck und dem vierten Schwellenwert angibt.

10. Bremssteuervorrichtung (1, 60) nach Anspruch 9,

die einen Schwellenwert-Koordinatenspeicher (47) aufweist, der dazu ausgelegt ist, Folgendes zu speichern:

- einen Feinabstimmungs-Brems-Minimal-AC-Druck, welcher der Soll-AC--Druck bei einer unteren Grenze ist, welche den Feinabstimmungs-Bremsmodus wählt, sowie einen minimalen ersten Schwellenwert, welcher der erste Schwellenwert bei dem Feinabstimmungs-Brems-Minimal-AC-Druck ist;
- einen Feinabstimmungs-Brems-Maximal-AC-Druck, welcher der Soll-AC-Druck bei einer oberen Grenze ist, die den Feinabstimmungs-Bremsmodus wählt, sowie einen maximalen ersten Schwellenwert, welcher der erste Schwellenwert bei dem Feinabstimmungs-Brems-Maximal-AC-Druck ist;
- einen Feinabstimmungs-Freigabe-Minimal-AC-Druck, welcher der Soll-AC-Druck bei einer unteren Grenze ist, welche den Feinabstimmungs-Freigabemodus wählt, sowie einen minimalen vierten Schwellenwert, welcher der vierte Schwellenwert bei dem Feinabstimmungs-Freigabe-Minimal-AC-Druck ist; und
- einen Feinabstimmungs-Freigabe-Maximal-AC-Druck, welcher der Soll-AC-Druck bei einer oberen Grenze ist, welche den Feinabstimmungs-Freigabemodus wählt, sowie einen maximalen vierten Schwellenwert, welcher der vierte Schwellenwert bei dem Feinabstimmungs-Freigabe-Maximal-AC-Druck ist;

wobei die Schwellenwert-Erfassungseinheit (43)

- in einem dritten Koordinatensystem, welches den Soll-AC-Druck als vertikale Achse und die AC-Druckabweichung als horizontale Achse verwendet, dazu ausgelegt ist, eine gerade Linie, welche einen Punkt, der durch den Feinabstimmungs-Brems-Minimal-AC-Druck und den minimalen ersten Schwellenwert bestimmt ist, mit einem Punkt verbindet, der durch den Feinabstimmungs-Brems-Maximal-AC-Druck und den maximalen ersten Schwellenwert bestimmt ist, als lineare Formel behandelt, welche eine Relation zwischen dem Soll-AC-Druck und dem ersten Schwellenwert angibt, und
- in dem dritten Koordinatensystem dazu ausgelegt ist, eine gerade Linie, welche einen Punkt, der durch den Feinabstimmungs-Freigabe-Minimal-AC-Druck und den minimalen vierten Schwellenwert bestimmt ist, mit einem Punkt verbindet, der durch den Feinabstimmungs-Freigabe-Maximal-AC-Druck und den maximalen vierten Schwellenwert bestimmt ist, als lineare Formel behandelt, die eine Relation zwischen dem Soll-AC-Druck und dem vierten Schwellenwert angibt.

11. Bremssteuerungsverfahren, das ein Bremssteuerventil (12) steuert, welches ein Ladeventil (20), das einen Steuerdruck für ein Servoventil (13) erhöht, welches einen Bremszylinder (12) mit Druckluft beaufschlagt, sowie ein Entladeventil (21) aufweist, welches den Steuerdruck verringert,
**dadurch gekennzeichnet,**
**dass** das Verfahren folgende Schritte aufweist:

- einen Sollwert-Eingabeschritt, bei dem ein Sollwert des Steuerdrucks für das Servoventil (13), nachstehend als Soll-AC-Druck bezeichnet, als Eingangssignal empfangen wird;
- einen Istwert-Eingabeschritt, bei dem ein Istwert des Steuerdrucks für das Servoventil (13), nachstehend als Ist-AC-Druck bezeichnet, als Eingangssignal empfangen wird;
- einen Abweichungs-Erfassungsschritt, bei dem eine AC-Druckabweichung erhalten wird durch Subtrahieren des Soll-AC-Drucks von dem Ist-AC-Druck;
- einen Schwellenwert-Erfassungsschritt, bei dem auf der Basis von dem Soll-AC-Druck folgende Werte erhalten werden: ein erster Schwellenwert, der in Abhängigkeit von dem Soll-AC-Druck variiert, ein zweiter Schwellenwert, der gleich dem oder größer als der erste Schwellenwert ist, ein dritter Schwellenwert, der gleich dem oder größer als der zweite Schwellenwert ist, und ein vierter Schwellenwert, der gleich dem oder größer als der dritte Schwellenwert ist und der in Abhängigkeit von dem Soll-AC-Druck variiert;
- einen Modus-Wählschritt, bei dem ein Bremsmodus gewählt wird, wenn die AC-Druckabweichung kleiner als der oder gleich dem ersten Schwellenwert ist, ein Feinabstimmungs-Bremsmodus gewählt wird, wenn die AC-Druckabweichung den ersten Schwellenwert überschreitet, aber kleiner als der oder gleich dem zweiten Schwellenwert ist, ein Haltemodus gewählt wird, wenn die AC-Druckabweichung den zweiten Schwellenwert überschreitet, aber kleiner als der oder gleich dem dritten Schwellenwert ist, ein Feinabstimmungs-Freigabemodus gewählt wird, wenn die AC-Druck-abweichung den dritten Schwellenwert überschreitet, aber kleiner als der oder gleich dem vierten Schwellenwert ist, und ein Freigabemodus gewählt wird, wenn die AC-Druckabweichung den vierten Schwellenwert überschreitet;
- einen Befehlssignal-Erzeugungsschritt, in dem ein Befehlssignal erzeugt wird, welches das Ladeventil (20) und das Entladeventil (21) in Abhängigkeit von dem Modus steuert, der in dem Modus-Wählschritt gewählt worden ist; und
- einen Befehlssignal-Ausgabeschritt, in dem das Befehlssignal, das in dem Befehlssignal-Erzeugungsschritt erzeugt worden ist, an das Bremssteuerventil (12) abgegeben wird.

12. Programm, das ein Bremssteuerventil (12) steuert, welches ein Ladeventil (20), das dazu ausgelegt ist, einen Steuerdruck für ein Relaisventil (13) zu erhöhen, welches einen Bremszylinder (2) mit Druckluft beaufschlagt, und ein Entladeventil (21) aufweist, dass dazu ausgelegt ist, den Steuerdruck zu verringern, wobei das Programm dazu ausgelegt ist, einen Computer zu veranlassen, zu funktionieren als:

- Sollwert-Eingabeeinheit, die einen Sollwert des Steuerdrucks für das Servoventil (13), nachstehend als Soll-AC-Druck bezeichnet, als Eingabe empfängt;
- Istwert-Eingabeeinheit, die einen Istwert des Steuerdrucks für das Servoventil (13), nachstehend als Ist-AC-Druck bezeichnet, als Eingabe empfängt;
- Abweichungs-Erfassungseinheit, die eine AC-Druckabweichung erfasst, und zwar durch Subtrahieren des Soll-AC-Drucks von dem Ist-AC-Druck;
- Schwellenwert-Erfassungseinheit, die auf der Basis des Soll-AC-Drucks folgende Werte erhält: einen ersten Schwellenwert, der in Abhängigkeit von dem Soll-AC-Druck variiert, einen zweiten Schwellenwert, der gleich dem oder größer als der erste Schwellenwert ist, einen dritten Schwellenwert, der gleich dem oder größer als der zweite Schwellenwert ist, und einen vierten Schwellenwert, der gleich dem oder größer als der dritte Schwellenwert ist und der in Abhängigkeit von dem Soll-AC-Druck variiert;
- Modenwähleinrichtung, die einen Bremsmodus wählt, wenn die AC-Druckabweichung kleiner als die oder gleich dem ersten Schwellenwert ist, einen Feinabstimmungs-Bremsmodus wählt, wenn die AC-Druckabweichung den ersten Schwellenwert überschreitet aber kleiner als der oder gleich dem zweiten Schwellenwert ist, einen Haltemodus wählt, wenn die AC-Druckabweichung den zweiten Schwellenwert überschreitet aber kleiner als der oder gleich dem dritten Schwellenwert ist, einen Feinabstimmungs-Freigabemodus wählt, wenn die AC-Druckabweichung den dritten Schwellenwert überschreitet aber kleiner als der oder gleich dem vierten Schwellenwert ist, und einen Freigabemodus wählt, wenn die AC-Druckabweichung den vierten Schwellenwert überschreitet;
- Befehlssignal-Erzeugungseinrichtung, die ein Befehlssignal erzeugt, welches das Ladeventil (20) und das Entladeventil (21) in Abhängigkeit von dem Modus steuert, der von der Moduswähleinrichtung gewählt worden ist; und
- Befehlssignal-Ausgabeeinrichtung, die das von der Befehlssignal-Erzeugungseinrichtung erzeugte Befehlssignal an das Bremssteuerventil (12) abgibt.

**Revendications**

1. Appareil de commande de frein (1, 60) qui est adapté à commander une valve de commande de frein (12) incluant une valve de charge (20) qui est adaptée à augmenter une pression de commande pour une valve relais (13) qui charge de l'air comprimé vers un cylindre de frein (2), et une valve de décharge (21) qui est adaptée à abaisser la pression de commande, comprenant:

- un dispositif d'injection de valeur cible (40) qui est adapté à accepter une valeur cible de la pression de commande pour la valve relais (13), désignée dans ce qui suit par pression AC cible, à titre d'entrée;
- un dispositif d'injection de valeur réelle (41) qui est adapté à accepter une valeur réelle de la pression de commande pour la valve relais (13), désignée dans ce qui suit par pression AC réelle, à titre d'entrée;
- un dispositif d'acquisition de déviation (42) qui est adapté à acquérir une déviation de pression AC en soustrayant la pression AC cible depuis la pression AC réelle;
- un dispositif d'acquisition de valeur seuil (43) qui est adapté à acquérir, sur la base de la pression AC cible, une première valeur seuil qui varie en accord avec la pression AC cible, une seconde valeur seuil égale ou supérieure à la première valeur seuil, une troisième valeur seuil égale ou supérieure à la seconde valeur seuil, et une quatrième valeur seuil qui est égale ou supérieure à la troisième valeur seuil qui varie en accord avec la pression AC cible;
- un sélecteur de mode (44) qui est adapté à sélectionner un mode de frein quand la déviation de pression AC est inférieure ou égale à la première valeur seuil, à sélectionner un mode de frein à adaptation fine quand la déviation de pression AC excède la première valeur seuil mais est inférieure ou égale à la seconde valeur seuil, à sélectionner un mode de maintien quand la déviation de pression AC excède la seconde valeur seuil mais est inférieure ou égale à la troisième valeur seuil, à sélectionner un mode de libération à adaptation fine quand la déviation de pression AC excède la troisième valeur seuil mais est inférieure ou égale à la quatrième valeur seuil, et à sélectionner un mode de libération quand la déviation de pression AC excède la quatrième valeur seuil;

- un générateur de signal de commande (45, 61) qui est adapté à générer un signal de commande qui commande la valve de charge (20) et la valve de décharge (21) en accord avec le mode sélectionné par le sélecteur de mode (44); et

- un dispositif de sortie de signal de commande (46) qui est adapté à sortir le signal de commande généré par le générateur de signal de commande (45, 61) vers la valve de commande de freinage (12).

2. Appareil de commande de frein (1, 60) selon la revendication 1, **caractérisé en ce que** le générateur de signal de commande (45, 61)

- quand le mode de frein est sélectionné, est adapté à générer un signal de commande qui applique une commande pour ouvrir la valve de charge (20) et également pour fermer la valve de décharge (21),

- quand le mode de frein à adaptation fine est sélectionné, est adapté à générer un signal de commande qui applique une commande pour alternativement ouvrir et fermer la valve de charge (20) à un intervalle temporel fixé, et également pour fermer la valve de décharge (21),

- quand le mode de maintien est sélectionné, est adapté à générer un signal de commande qui applique une commande pour fermer la valve de charge (20) et la valve de décharge (21),

- quand le mode de libération à adaptation fine est sélectionné, est adapté à générer un signal de commande qui applique une commande pour alternativement ouvrir et fermer la valve de décharge (21) à un intervalle temporel fixé, également pour fermer la valve de charge (20), et

- quand le mode de libération est sélectionné, est adapté à générer un signal de commande qui applique une commande pour ouvrir la valve de décharge (21), et également pour fermer la valve de charge (20).

3. Appareil de commande de frein (60) selon la revendication 2, **caractérisé en ce que**, dans l'intervalle temporel fixé pour alternativement ouvrir et fermer la valve de charge (20) quand le mode de frein à adaptation fine est sélectionné, le rapport du temps pendant lequel la valve de charge (20) est ouverte sur le temps pendant lequel la valve de charge (20) est fermée varie en accord avec la pression AC cible et avec la déviation de pression AC.

4. Appareil de commande de frein (60) selon la revendication 3, comprenant un stockage de temps de frein à adaptation fine (62, 63) qui est adapté à stocker

- une première valeur seuil maximum, qui est la première valeur seuil à une pression AC maximum de frein à adaptation fine définie comme étant la pression AC cible à une limite supérieure qui sélectionne le mode de frein à adaptation fine, et un premier temps fermé qui est un temps fermé de la valve de charge (20) dans le cas du mode de frein à adaptation fine à la première valeur seuil maximum,

- une seconde valeur seuil maximum, qui est la seconde valeur seuil à la pression AC maximum de frein à adaptation fine, et un second temps fermé, qui est un temps fermé de la valve de charge (20) dans le cas du mode de frein à adaptation fine à la seconde valeur seuil maximum,

- une première valeur seuil minimum, qui est la première valeur seuil à la pression AC minimum de frein à adaptation fine définie comme étant la pression AC cible à une limite inférieure qui sélectionne le mode de frein à adaptation fine, et un troisième temps fermé, qui est un temps fermé de la valve de charge (20) dans le cas du mode de frein à adaptation fine à la première valeur seuil minimum, et

- une seconde valeur seuil minimum, qui est la seconde valeur seuil à la pression AC minimum de frein à adaptation fine, et un quatrième temps fermé, qui est un temps fermé de la valve de charge (20) dans le cas du mode de frein à adaptation fine à la seconde valeur seuil minimum, dans lequel le générateur de signal de commande (61)

- dans un premier système de coordonnées adoptant la pression AC cible à titre de l'axe vertical et le temps fermé de la valve de charge (20) à titre d'axe horizontal, est adapté à spécifier un premier point de division de valeur seuil en divisant proportionnellement par la pression AC cible un segment de ligne qui joint un point spécifié par la première valeur seuil maximum et le premier temps fermé à un point spécifé par la première valeur seuil minimum et le premier temps fermé,

- dans le premier système de coordonnées, est adapté à spécifier un second point de division de valeur seuil en divisant proportionnellement par la pression AC cible un segment de ligne qui joint un point spécifié par la seconde valeur seuil maximum et le second temps fermé à un point spécifié par la seconde valeur seuil minimum et le quatrième temps fermé, et

- en utilisant une ligne droite joignant le premier point de division de valeur seuil et le second point de division de valeur seuil, est adapté à calculer un temps fermé de la valve de charge (20) dans le mode de frein à adaptation fine depuis la pression AC cible et la déviation de pression AC.

**5.** Appareil de commande de frein (60) selon l'une quelconque des revendications 2 à 4, **caractérisé en ce que** dans l'intervalle de temps fixé pour alternativement ouvrir et fermer la valve de décharge (21) quand le mode de libération à adaptation fine est sélectionné, le rapport du temps pendant lequel la valve de décharge (21) est ouverte sur le temps pendant lequel la valve de décharge (21) est fermée varie en accord avec la pression AC cible et la déviation de pression AC.

**6.** Appareil de commande de frein (60) selon la revendication 5, comprenant un stockage de temps de libération à adaptation fine (62, 63) qui est adapté à stocker

- une quatrième valeur seuil maximum, qui est la quatrième valeur seuil à une pression AC maximum de libération à adaptation fine définie comme étant la pression AC cible à une limite supérieure qui sélectionne le mode de libération à adaptation fine, et un premier temps ouvert, qui est un temps ouvert de la valve de décharge (21) dans le cas de la sélection du mode de libération à adaptation fine à la quatrième valeur seuil maximum,
- une troisième valeur seuil maximum, qui est la troisième valeur seuil à la pression AC maximum de libération à adaptation fine, et un second temps ouvert, qui est un temps ouvert de la valve de décharge (21) dans le cas de la sélection du mode de libération à adaptation fine à la troisième valeur seuil maximum,
- une quatrième valeur seuil minimum, qui est la quatrième valeur seuil à une pression AC minimum de libération à adaptation fine définie comme étant la pression AC cible à une limite inférieure qui sélectionne le mode de libération à adaptation fine, et un troisième temps ouvert, qui est un temps ouvert de la valve de décharge (21) dans le cas de la sélection du mode de libération à adaptation fine à la quatrième valeur seuil minimum, et
- une troisième valeur seuil minimum, qui est la troisième valeur seuil à la pression AC minimum de libération à adaptation fine, et un quatrième temps ouvert, qui est un temps ouvert de la valve de décharge (21) dans le cas de la sélection du mode de libération à adaptation fine à la troisième valeur seuil minimum,

dans lequel le générateur de signal de commande (61)

- dans un second système de coordonnées adoptant la pression AC cible à titre d'axe vertical et le temps ouvert de la valve de décharge (21) à titre d'axe horizontal, est adapté à spécifier un troisième point de division de valeur seuil en divisant proportionnellement par la pression AC cible un segment de ligne qui joint un point spécifié par la quatrième valeur seuil maximum et le premier temps ouvert à un point spécifié par la quatrième valeur seuil minimum et le troisième temps ouvert,
- dans le second système de coordonnées, est adapté à spécifier un quatrième point de division de valeur seuil en divisant proportionnellement par la pression AC cible un segment de ligne qui joint un point spécifié par la troisième valeur seuil maximum et le second temps ouvert à un point spécifié par la troisième valeur seuil minimum et le quatrième temps ouvert, et
- en utilisant une ligne droite qui joint le troisième point de division de valeur seuil et le quatrième point de division de valeur seuil, est adapté à calculer un temps ouvert de la valve de décharge (21) dans le mode de libération à adaptation fine depuis la pression AC cible et la déviation de pression AC.

**7.** Appareil de commande de frein (1, 60) selon l'une quelconque des revendications 1 à 6, **caractérisé en ce que** la première valeur seuil et la seconde valeur seuil sont accordées quand la pression AC cible est plus grande qu'une pression AC maximum de frein à adaptation fine définie comme étant la pression AC cible à une limite supérieure qui sélectionne le mode de frein à adaptation fine, et **en ce que** la troisième valeur seuil et la quatrième valeur seuil sont accordées quand la pression AC cible est inférieure à une pression AC minimum de libération à adaptation fine définie comme étant la pression AC cible à une limite inférieure qui sélectionne le mode de libération à adaptation fine.

**8.** Appareil de commande de frein (1, 60) selon l'une quelconque des revendications 1 à 7, **caractérisé en ce que** la première valeur seuil et la seconde valeur seuil sont accordées quand la pression AC cible est inférieure à une pression AC minimum de frein à adaptation fine définie comme étant la pression AC cible à une limite inférieure qui sélectionne le mode de frein à adaptation fine, et **en ce que** la troisième valeur seuil et la quatrième valeur seuil sont accordées quand la pression AC cible est plus grande qu'une pression AC maximum de libération à adaptation fine définie comme étant la pression AC cible à une limite supérieure qui sélectionne le mode de libération à adaptation fine.

**9.** Appareil de commande de frein (1, 60) selon l'une quelconque des revendications 1 à 8, **caractérisé en ce que** le dispositif d'acquisition de valeur seuil (43)

- est adapté à calculer la première valeur seuil en substituant la pression AC cible dans une formule linéaire qui indique une relation entre la pression AC cible et la première valeur seuil, et
- est adapté à calculer la quatrième valeur seuil en substituant la pression AC cible dans une formule linéaire qui indique une relation entre la pression AC cible et la quatrième valeur seuil.

**10.** Appareil de commande de frein (1, 60) selon la revendication 9, comprenant un stockage de coordonnées de valeur seuil (47) qui est adapté à stocker

- une pression AC minimum de frein à adaptation fine, qui est la pression AC cible à une limite inférieure qui sélectionne le mode de frein à adaptation fine, et une première valeur seuil minimum, qui est la première valeur seuil à la pression AC minimum de frein à adaptation fine,
- une pression AC maximum de frein à adaptation fine, qui est la pression AC cible à une limite supérieure qui sélectionne le mode de frein à adaptation fine, et une première valeur seuil maximum, qui est la première valeur seuil à la pression AC maximum de frein à adaptation fine,
- une pression AC minimum de libération à adaptation fine, qui est la pression AC cible à une limite inférieure qui sélectionne le mode de libération à adaptation fine, et une quatrième valeur seuil minimum, qui est la quatrième valeur seuil à la pression AC minimum de libération à adaptation fine, et
- une pression AC maximum de libération à adaptation fine, qui est la pression AC cible à une limite supérieure qui sélectionne le mode de libération à adaptation fine, et une quatrième valeur seuil maximum, qui est la quatrième valeur seuil à la pression AC maximum de libération à adaptation fine,

dans lequel le dispositif d'acquisition de valeur seuil (43)

- dans un troisième système de coordonnées qui adopte la pression AC cible à titre d'axe vertical et la déviation de pression AC à titre d'axe horizontal, est adapté à traiter une ligne droite qui joint un point spécifié par la pression AC minimum de frein à adaptation fine et la première valeur seuil minimum à un point spécifié par la pression AC maximum de frein à adaptation fine, et la première valeur seuil maximum à titre de formule linéaire indiquant une relation entre la pression AC cible et la quatrième valeur seuil, et
- dans le troisième système de coordonnées, est adapté à traiter une ligne droite qui joint un point spécifié par la pression AC minimum de libération à adaptation fine et la quatrième valeur seuil minimum à un point spécifié par la pression AC maximum de libération à adaptation fine et la quatrième valeur seuil maximum comme étant une formule linéaire indiquant une relation entre la pression AC cible et la quatrième valeur seuil.

**11.** Procédé de commande de frein qui commande une valve de commande de frein (12) incluant une valve de charge qui augmente une pression de commande pour une valve relais (13) qui charge de l'air comprimé vers un cylindre de frein (2) et une valve de décharge (21) qui abaisse la pression de commande,
**caractérisé en ce qu'**il comprend les étapes suivantes:

- une étape d'injection de valeur cible qui accepte une valeur cible de la pression de commande pour la valve relais (13), dénommée dans ce qui suit pression AC cible, à titre d'entrée;
- une étape d'injection de valeur réelle qui accepte une valeur réelle de la pression de commande pour la valve relais (13), dénommée dans ce qui suit pression AC réelle, à titre d'entrée;
- une étape d'acquisition de déviation qui acquiert une déviation de pression AC en soustrayant la pression AC cible depuis la pression AC réelle;
- une étape d'acquisition de valeur seuil qui acquiert, sur la base de la pression AC cible, une première valeur seuil qui varie en accord avec la pression AC cible, une seconde valeur seuil égale ou supérieure à la première valeur seuil, une troisième valeur seuil égale ou supérieure à la seconde valeur seuil, et une quatrième valeur seuil qui est égale ou supérieure à la troisième valeur seuil et qui varie en accord avec la pression AC cible;
- une étape de sélection de mode qui sélectionne un mode de frein lorsque la déviation de pression AC est inférieure ou égale à la première valeur seuil, qui sélectionne un mode de frein à adaptation fine quand la déviation de pression AC excède la première valeur seuil mais est inférieure ou égale à la seconde valeur seuil, qui sélectionne un mode de maintien quand la déviation de pression AC excède la seconde valeur seuil mais est inférieure ou égale à la troisième valeur seuil, qui sélectionne un mode de libération à adaptation fine quand la déviation de pression AC excède la troisième valeur seuil mais est inférieure ou égale à la quatrième valeur seuil, et qui sélectionne un mode de libération quand la déviation de pression AC excède la quatrième valeur seuil;
- une étape de génération de signal de commande qui génère un signal de commande qui commande la valve de charge et la valve de décharge (21) en accord avec le mode sélectionné par l'étape de sélection de mode; et
- une étape de sortie de signal de commande qui délivre le signal de commande généré par l'étape de génération de signal de commande vers la valve de commande de frein (12).

12. Programme qui commande une valve de commande de frein (12) incluant une valve de charge qui est adaptée à augmenter une pression de commande pour une valve relais (13) qui charge de l'air comprimé vers un cylindre de frein (2), et une valve de décharge (21) qui est adaptée à abaisser la pression de commande, le programme amenant un ordinateur à fonctionner comme:

- un moyen d'injection de valeur cible qui accepte une valeur cible de la pression de commande pour la valve relais (13), dénommée dans ce qui suit pression AC cible, à titre d'entrée;
- un moyen d'entrée de valeur actuelle qui accepte une valeur actuelle de la pression de commande pour la valve relais (13), dénommée dans ce qui suit pression AC réelle, à titre d'entrée;
- un moyen d'acquisition de déviation qui acquiert une déviation de pression AC en soustrayant la pression AC cible depuis la pression AC réelle;
- un moyen d'acquisition de valeur seuil qui acquiert, sur la base de la pression AC cible, une première valeur seuil qui varie en accord avec la pression AC cible, une seconde valeur cible égale ou supérieure à la première valeur cible, une troisième valeur cible égale ou supérieure à la seconde valeur cible, et une quatrième valeur cible qui est égale ou supérieure à la troisième valeur cible et qui varie en accord avec la pression AC cible;
- un moyen de sélection de mode qui sélectionne un mode de frein quand la déviation de pression AC est inférieure ou égale à la première valeur seuil, qui sélectionne un mode de frein à adaptation fine quand la déviation de pression AC excède la première valeur seuil mais est égale ou inférieure à la seconde valeur seuil, en sélectionnant un mode de libération à adaptation fine quand la déviation de pression AC excède la troisième valeur seuil mais est inférieure ou égale à la quatrième valeur seuil, et sélectionne un mode de libération quand la déviation de pression AC excède la quatrième valeur seuil;
- un moyen de génération de signal de commande qui génère un signal de commande pour commander la valve de charge et la valve de décharge (21) en accord avec le mode sélectionné par le moyen de sélection de mode; et
- un moyen de sortie de signal de commande, qui délivre le signal de commande généré par le moyen de génération de signal de commande vers le dispositif de commande de frein (12).

FIG. 1

ELECTRICAL
SIGNAL

CONTROL PATH

DRIVING PATH

## FIG. 2

APPLY MAGNET VALVE

RELEASE MAGNET VALVE

## FIG. 3

PROCESSOR

MEMORY

INPUT/OUTPUT DEVICE

CONTROL OUTPUT DEVICE

EP 2 757 008 B1

# FIG. 4

ACTUAL AC PRESSURE

TARGET AC PRESSURE

1

ACTUAL VALUE INPUT DEVICE — 41

40 — TARGET VALUE INPUT DEVICE

DEVIATION ACQUISITION DEVICE — 42

43 — THRESHOLD VALUE ACQUISITION DEVICE

47 — THRESHOLD VALUE COORDINATE STORAGE

MODE SELECTOR

44

COMMAND SIGNAL GENERATOR

OPEN/CLOSED TIME STORAGE

45

48

COMMAND SIGNAL OUTPUT DEVICE — 46

COMMAND SIGNAL

EP 2 757 008 B1

FIG. 5

FOURTH THRESHOLD VALUE G4 | FIFTH PRESSURE RANGE P5

THIRD THRESHOLD VALUE G3 | FOURTH PRESSURE RANGE P4

0 (TARGET AC PRESSURE POSITION) | THIRD PRESSURE RANGE P3

SECOND THRESHOLD VALUE G2 | SECOND PRESSURE RANGE P2

FIRST THRESHOLD VALUE G1

FIRST PRESSURE RANGE P1

AC PRESSURE DEVIATION

DISCHARGE VALVE — OPEN / CLOSE

CHARGE VALVE — OPEN / CLOSE

(1) BRAKE MODE  (2) FINE-TUNING BRAKE MODE  (3) HOLD MODE  (4) FINE-TUNING RELEASE MODE  (5) RELEASE MODE  (4) FINE-TUNING RELEASE MODE  (3) HOLD MODE

32

FIG. 6

FIG. 7

FINE-TUNING BRAKE MODE

FIG. 8

## FINE-TUNING RELEASE MODE

DISCHARGE
VALVE
OPEN TIME
T (ms)

EIGHTH TIME COORDINATE
VALUES (GL3, TL3)

SEVENTH TIME COORDINATE
VALUES (GL4, TL4)

FOURTH
THRESHOLD
VALUE
DIVISION
POINT
(GE3, TE3)

TARGET AC
PRESSURE = PL

THIRD THRESHOLD VALUE
DIVISION POINT (GE4, TE4)

(PF-PE, TEW)

FIFTH TIME COORDINATE
VALUES (GM4, TM4)

TARGET AC
PRESSURE = PE

TARGET AC
PRESSURE = PM

SIXTH TIME
COORDINATE
VALUES (GM3,
TM3)

O        GM3,GL        PF-PE        GL4        GE4        GM4
         3,GE3
                    AC PRESSURE DEVIATION (kPa)

EP 2 757 008 B1

FIG. 9

ACTUAL AC
PRESSURE

TARGET AC
PRESSURE

60

ACTUAL VALUE
INPUT DEVICE
41

40
TARGET VALUE
INPUT DEVICE

DEVIATION
ACQUISITION
DEVICE
42

43
THRESHOLD VALUE
ACQUISITION DEVICE

47
THRESHOLD
VALUE
COORDINATE
STORAGE

MODE SELECTOR

44

62
PERIOD
STORAGE

COMMAND SIGNAL
GENERATOR

61

63
OPEN/CLOSED
TIME
COORDINATE
STORAGE

COMMAND SIGNAL
OUTPUT DEVICE

46

COMMAND
SIGNAL

36

## FIG. 10

+

FINE-TUNING BRAKE MODE

CHARGE VALVE CLOSED TIME S (ms)

DISCHARGE VALVE OPEN TIME T (ms)

FINE-TUNING RELEASE MODE

NINTH TIME COORDINATE VALUES (GK1, SJ5)

TARGET AC PRESSURE = PJ

FIFTH THRESHOLD VALUE DIVISION POINT (GK1, SC1)

TARGET AC PRESSURE = PC

(PD-PC, SCP)

TARGET AC PRESSURE = PK

SECOND/FOURTH TIME COORDINATE VALUES (GKJ2, SKJ2)

FIRST TIME COORDINATE VALUES (GK1, SK1)

TENTH TIME COORDINATE VALUES (GM4, TJ5)

TARGET AC PRESSURE = PL

(PF-PE, TEW)

SIXTH/EIGHTH TIME COORDINATE VALUES (GML3, TML3)

TARGET AC PRESSURE = PE

SIXTH THRESHOLD VALUE DIVISION POINT (GM4, TE4)

TARGET AC PRESSURE = PM

FIFTH TIME COORDINATE VALUES (GM4, TM4)

GK1    PD-PC    GKJ2    0    GML3    PF-PE    GM4    +

−

AC PRESSURE DEVIATION (kPa)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002255030 A